(19) Europäisches Patentamt
European Patent Office
Office européen des brevets

(11) Publication number: **0 411 610 B1**

(12) # EUROPEAN PATENT SPECIFICATION

(45) Date of publication of patent specification: **04.01.95**

(51) Int. Cl.$^6$: **C09K 19/46**

(21) Application number: **90114769.4**

(22) Date of filing: **01.08.90**

(54) **Ferroelectric liquid crystal composition and light switching device using said composition.**

(30) Priority: **01.08.89 JP 199661/89**
**25.04.90 JP 109161/90**

(43) Date of publication of application:
**06.02.91 Bulletin 91/06**

(45) Publication of the grant of the patent:
**04.01.95 Bulletin 95/01**

(84) Designated Contracting States:
**CH DE FR GB LI SE**

(56) References cited:
**EP-A- 0 267 585**
**EP-A- 0 298 702**
**EP-A- 0 355 313**
**WO-A-89/06265**

(73) Proprietor: **Chisso Corporation**
**6-32, Nakanoshima 3-chome**
**Kita-ku**
**Osaka-shi**
**Osaka-fu (JP)**

(72) Inventor: **Terashima, Kanetsugu**
**8890, Goi**
**Ichiharashi,**
**Chibaken (JP)**
Inventor: **Ichihashi, Mitsuyoshi**
**1414, Ohnakazato**
**Fujinomiyashi,**
**Shizuokaken (JP)**
Inventor: **Kikuchi, Makoto**
**1708-7, Johsai**
**Kisarazushi,**
**Chibaken (JP)**
Inventor: **Murashiro, Katsuyuki**
**17, Tatsumidaihigashi 2-chome**
**Ichiharasi,**
**Chibaken (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

EP 0 411 610 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a ferroelectric liquid crystal composition, and a light switching device using the composition. More particularly, it is concerned with a ferroelectric liquid crystal composition containing at least one smectic liquid crystal compound, and at least one optically active compound as main components, which exhibits quick response, and a light switching device using the composition.

Liquid crystal compounds are widely used in display devices. Most of such display devices are of TN (twisted nematic) mode, and as liquid crystal compounds, those having a nematic phase are used.

Although the TN display mode, being classified into a non-emissive type, has features that the display scarecely makes viewers tired at the eyes, and its power consumption is markedly small, it has disadvantages in that response is slow, and a display cannot be seen depending on a viewing angle.

To make the best use of the above features of the TN display mode, which are desirable for flat display devices, improvements in response properties, and the viewing angle are required.

In order to satisfy the above requirements, i.e., quick response and a wide viewing angle, an attempt has been made to improve liquid crystal material to be used in the TN display mode. However, even if such improved liquid crystal compounds are employed, the TN display mode is much inferior in the response time and the width of a viewing angle to other emissive type display modes such as electroluminescence display devices and plasma display devices.

To obtain response properties comparable to those of the emissive type display while maintaining the features of the TN display mode of the non-emissive type, such as small power consumption, it is essential to develop a novel liquid crystal display mode in place of the TN display mode.

As one of attempts to meet the above requirements, N.A. Clark & S.T. Lagerwall proposed a display system utilizing a light switching phenomenon of ferroelectric liquid crystal compounds (Appl. Phys. Lett. 36, 899 (1980)).

Ferroelectric liquid crystal compounds were first reported by R.B. Mayer et al. (J. Jhys., 36, 69 (1975)). These ferroelectric liquid crystal compounds are classified into the groups: a chiral smectic C phase, a chiral smectic I phase, a chiral smectic F phase, a chiral smectic G, and a chiral smectic H phase (which are hereinafter sometimes abbreviated to an SC* phase, an SI* phase, an SF* phase, an SG* phase, and an SH* phase, respectively) depending on the structure thereof.

In the chiral smectic phase, molecules are in layers, and are tilted relative to the layer plane. The tilt direction slightly changes from layer to layer, producing a helical structure in the molecular configuration. The helical axis is vertical to the layer plane. In the chiral smectic phase, spontaneous polarization occurs, and thus when a DC electric field is applied across the chiral smectic phase in parallel with the layer, molecules are turned over by a $\pi$ rotation around a helical axis as the axis of rotation by inverting the polarity of the applied DC voltage. A display device using such ferroelectric liquid crystal compounds utilizes the above switching phenomenon.

Of the chiral smectic phases, the SC* phase is now most drawing attention.

A display mode utilizing the switching phenomenon of the SC* phase are classified into two types: a birefringence mode using a pair of polarizers, and a guest-host mode using dichroic dye.

The display mode utilizing the switching phenomenon has features that (1) a response time is short, (2) it has memory properties, and (3) dependence of the viewing angle is small. Thus there is a possibility that the display mode is employed for high density display; it is very attractive as a display device. The display mode, however, has problems to be overcome at the present time.

A problem raised particularly in recent years is a spontaneous polarization value. When a ferroelectric liquid crystal material having a spontaneous polarization value of not less than 20 $nC/cm^2$ is filled in a cell with an insulator layer, there occurs a serious problem that switching by application of a pulse electric voltage becomes unattainable. In connection with this abnormal phenomenon, it is reported that in a ferroelectric liquid crystal material having a spontaneous polarization value of not less than 20 $nC/cm^2$, a counter electric voltage produced in the material by switching of spontaneously polarized dipoles exceeds a threshold electric voltage and, as a result, switching becomes unattainable even by application of a pulse electric voltage (see, for example, A. Yoshida, 13th Meeting of Liquid Crystals, pp. 142-143 (1987), and J. Dijon et al., SID 88 DIGEST, pp. 246-249 (1988)).

Thus it is said that when a polyimide film commonly used is employed as an insulator layer, in order to avoid the above abnormal phenomenon, the spontaneous polarization value of a ferroelectric liquid crystal material should be not more than 20 $nC/cm^2$ and preferably not more than 15 $nC/cm^2$.

For a ferroelectric liquid crystal material, when used in the practical display device (640 lines x 400 lines), the following are particularly required.

(1) It exhibits the SC* phase over a wide temperature range including room temperature (at least over a temperature range of 0 to 50 °C).

(2) The response time is not more than 100 µsec.

(3) It has good aligning properties.

However, a ferroelectric liquid crystal material (liquid crystal composition) having a spontaneous polarization value of not more than 20 $nC/cm^2$, and satisfying all of the above requirements has not been obtained.

In Japanese Patent Application Laid-Open No. 291679/1986 (Reference A) and PCT International Laid-Open W086/06401 (Reference B), for example, a ferroelectric liquid crystal material prepared by mixing non-chiral 5-alkyl-2-(4-alkoxyphenyl)pyrimidine having an SC phase with optically active compounds is disclosed. It is described that the material has a spontaneous polarization value of not more than 20 $nC/cm^2$, and exhibits the SC* phase over a wide temperature range including room temperature.

In the aforementioned Reference A, it is described that the above pyrimidine derivative is of low viscosity, and thus when used in a ferroelectric liquid crystal composition as a smectic liquid crystal necessary for exhibiting the SC* phase (this smectic liquid crystal is hereinafter referred to as a "base SC compound"), is very effective in increasing the response properties of the ferroelectric liquid crystal composition. In fact, however, the ferroelectric liquid crystal composition described in the above References A and B cannot be said suitable for practical use, because its response time is 300 to 500 µsec, although it satisfies the above requirements in respect of the spontaneous polarization value, and the temperature range of the SC* phase (see, for example, ferroelectric liquid crystal compositions described in Examples 1 and 2 of Reference A, and ferroelectric liquid crystal compositions described in Examples 45 and 46 of Reference B).

Japanese Patent Application Laid-Open No. 190842/1988 (Reference C) discloses a ferroelectric liquid crystal composition comprising a non-chiral smectic C pyrimidine-based compound, and an optically active compound represented by the general formula (A) as described hereinafter. It is described that the ferroelectric liquid crystal composition shown in Example 12 of Reference C, for example, has a spontaneous polarization value of 9 $nC/cm^2$, and a response time of 76 µsec at 20 °C, and exhibits the SC* phase over a wide temperature range including room temperature. Thus the ferroelectric liquid crystal composition is considered to almost satisfy the above requirements, and to be very suitable for practical use as compared with the ferroelectric liquid crystal compositions described in the aforementioned References A and B.

The ferroelectric liquid crystal composition described in the above Reference C, however, has a problem to be solved for its practical use; that is, it does not have a cholesteric phase, and thus uniform alignment cannot be attained by aligning techniques generally employed for TN liquid crystal materials.

At the present time, for aligning a ferroelectric liquid crystal composition, a shearing method, a temperature gradient method, and a surface treating method have been attempted to employ. The shearing method is such that a shearing stress is applied in the smectic A phase to cause aligning. The temperature gradient method is a method developed based on the findings that the smectic phase can be deemed to be a mono-dimensional crystal, and is similar to an epitaxial crystal growth method. The surface treating method has been put into practical use for aligning TN liquid crystal materials. In accordance with this method, a polymer film such as a polyimide film is used to coat a cell substrate, and the surface of the substrate is subjected to rubbing treatment to align liquid crystal molecules. From a viewpoint of commercial production of liquid crystal display devices, it is most desirable to align liquid crystal molecules by the surface treating method.

In phase transition of a ferroelectric liquid crystal material, there are the following four types of sequences:

(i) ISO phase - SC* phase,

(ii) ISO phase - N* phase - SC* phase,

(iii) ISO phase - SA phase - SC* phase, and

(iv) ISO phase - N* phase - SA phase - SC* phase,

wherein the ISO phase indicates an isotropic liquid phase, the N* phase indicates a cholesteric phase, and the SA phase indicates a smectic A phase.

It is a liquid crystal material undergoing a phase transition according to the sequence (iv) above that the aligning technique of surface treating method presently employed can be applied as it is (see, for example, Japanese Patent Application Laid-Open No. 250086/1986). Thus a ferroelectric liquid crystal material having the phase transition sequence (iv) above is greatly desired.

The ferroelectric liquid crystal composition described in the aforementioned Reference C, however, does not have a cholesteric phase, and thus the shearing method or the temperature gradient method

should be employed to uniformly align the composition. This aligning according to the shearing method or the temperature gradient method, however, takes a long time, and cannot be carried out with ease. Moreover, since the aligning technique presently employed cannot be applied as it is, a new investment in equipment is undesirably needed. For these reasons, the composition described in the above Reference C cannot be said suitable for practical use.

As apparent from the foregoing description, known ferroelectric liquid crystal compositions having a spontaneous polarization value of not more than 20 $nC/cm^2$ cannot be said suitable for practical use, and thus a ferroelectric liquid crystal composition having more improved characteristics is greatly desired.

## SUMMARY OF THE INVENTION

As a result of investigations to more improve the ferroelectric liquid crystal composition described in the aforementioned Reference C, it has been found that if specified compounds as described hereinafter are used in combination, there can be obtained a ferroelectric liquid crystal composition which has a spontaneous polarization value of not more than 20 $nC/cm^2$, exhibits the SC* phase over a wide temperature range including room temperature, and further has quick response properties.

An object of the present invention is to provide a ferroelectric liquid crystal composition having a spontaneous polarization value of not more than 20 $nC/cm^2$, exhibiting the SC* phase over a wide temperature range including room temperature, and further having quick response properties.

Another object of the present invention is to provide a light switching device using the above composition, which is excellent in response properties.

Other objects and advantages of the present invention will become apparent from the following detailed explanation.

The present invention relates to a ferroelectric liquid crystal composition containing three components (A), (B), and (C) as main components, the proportions of said components (A), (B), and (C) being 5 to 25% by weight, 60 to 90% by weight, and 2 to 15% by weight, respectively, based on the total weight of the components (A), (B), and (C), wherein:

the component (A) is at least one compound selected from the compounds represented by the general formula (A):

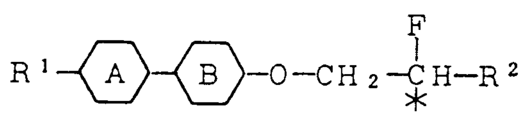

(A)

wherein $R^1$ and $R^2$ may be the same or different, and are independently a linear or branched alkyl group having 1 to 18 carbon atoms, or a linear or branched alkoxy group having 1 to 18 carbon atoms,

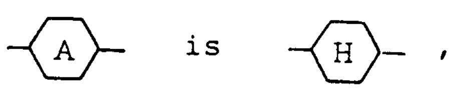

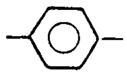 , 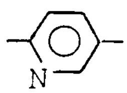 , 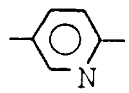 , 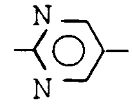 ,

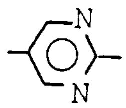 , 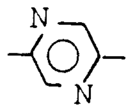 , 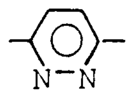 , 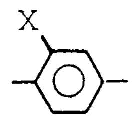 , or

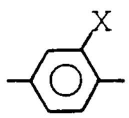 ,

wherein X is a cyano group, or a halogen atom,

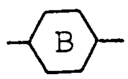 is 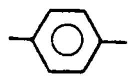 , 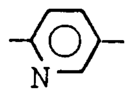 , 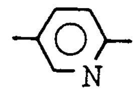 ,

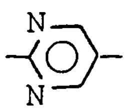 , 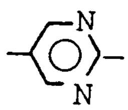 , 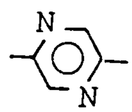 , 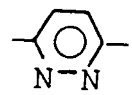 ,

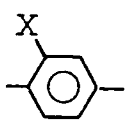 , or 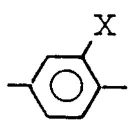 ,

wherein X is the same as defined above, and the symbol * indicates an asymmetrical carbon atom;

the component (B) is at least one compound selected from the compounds represented by the general formula (B):

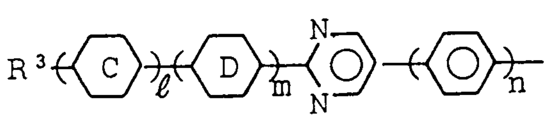 (B)

wherein $R^3$ and $R^4$ may be the same or different, and are independently a linear or branched alkyl group having 1 to 18 carbon atoms, a linear or branched alkoxy group having 1 to 18 carbon atoms, or a linear or branched alkanoyloxy group having 1 to 18 carbon atoms,

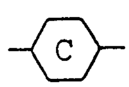 and 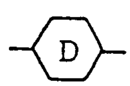

are independently

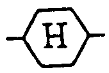 or 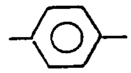 ,

and ℓ, m, and n are each 0 or 1, and having the smectic C phase; and

the component (C) is at least one compound selected from the group consisting of the compounds represented by the general formula (C-a):

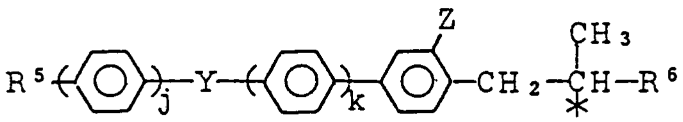 (C-a)

wherein $R^5$ is a linear or branched alkyl group having 1 to 18 carbon atoms, or a linear or branched alkoxy group having 1 to 18 carbon atoms, $R^6$ is a linear or branched alkyl group having 2 to 18 carbon aoms, or a linear or branched alkoxy group having 1 to 18 carbon atoms, Y is

$$-\overset{O}{\overset{\|}{C}}O-,\quad -O\overset{O}{\overset{\|}{C}}-,$$

$-CH_2O-$, or $-OCH_2-$, Z is a cyano group, a halogen atom, or a hydrogen atom, j is 0.1 or 2 and k is 0 or 1, and the symbol * is the same as defined above, and the compounds represented by the general formula (C-b):

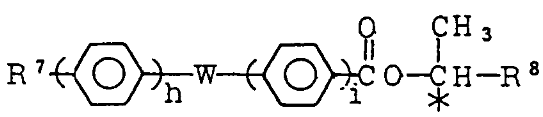 (C-b)

wherein $R^7$ is a linear or branched alkyl group having 1 to 18 carbon atoms, or a linear or branched alkoxy group having 1 to 18 carbon atoms, $R^8$ is a linear or branched alkyl group having 2 to 18 carbon atoms, or a linear or branched alkoxy group having 1 to 18 carbon atoms, W is

$$-\overset{O}{\overset{\|}{C}}O-,\quad -O\overset{O}{\overset{\|}{C}}-,$$

$-CH_2O-$, or $-OCH_2-$, h and i are each 0, 1, or 2 and the symbol * is the same as defined above.

The present invention further relates to a light switching device using the above ferroelectric liquid crystal composition.

## DETAILED DESCRIPTION OF THE INVENTION

Compounds represented by the general formula (A) to be used as the component (A) are large in spontaneous polarization, because a fluorine atom having a large dipole moment is connected directly to the asymmetric carbon atom. Thus they contribute to the quick response of the composition.

Specific examples of the compounds represented by the general formula (A) are compounds represented by the following general formulas (A-I), (A-II), (A-III), (A-IV), and (A-V).

General Formula (A-I):

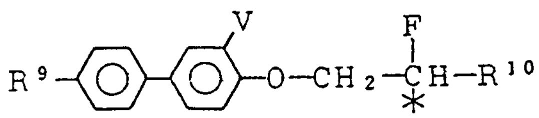

(A-I)

wherein $R^9$ and $R^{10}$ may be the same or different, and are independently a linear or branched alkyl group having 1 to 18 carbon atoms, or a linear or branched alkoxy group having 1 to 18 carbon atoms, V is -H, -CN, -F, or -Cl, and the symbol * indicates an asymmetric carbon atom.

General Formula (A-II):

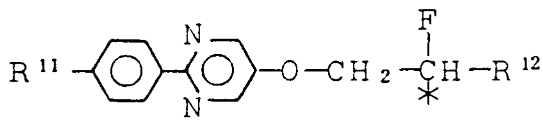

(A-II)

wherein $R^{11}$ and $R^{12}$ may be the same or different, and are independently a linear or branched alkyl group having 1 to 18 carbon atoms, or a linear or branched alkoxy group having 1 to 18 carbon atoms, and the symbol * indicates an asymmetric carbon atom.

General Formula (A-III):

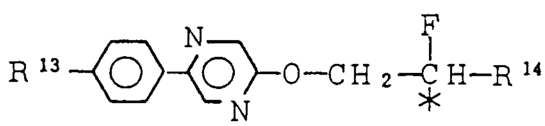

(A-III)

wherein $R^{13}$ and $R^{14}$ may be the same or different, and are independently a linear or branched alkyl group having 1 to 18 carbon atoms, or a linear or branched alkoxy group having 1 to 18 carbon atoms, and the symbol * indicates an asymmetric carbon atom.

General Formula (A-IV):

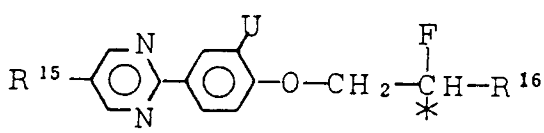

(A-IV)

wherein $R^{15}$ and $R^{16}$ may be the same or different, and are independently a linear or branched alkyl group having 1 to 18 carbon atoms, or a linear or branched alkoxy group having 1 to 18 carbon atoms, U is -H, -CN, -F, or -Cl, and the symbol * indicates an asymmetric carbon atom.

General Formula (A-V):

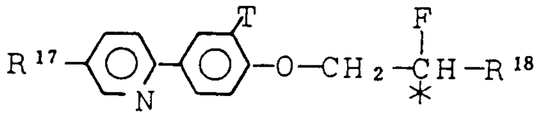

( A − V )

wherein $R^{17}$ and $R^{18}$ may be the same or different, and are independently a linear or branched alkyl group having 1 to 18 carbon atoms, or a linear or branched alkoxy group having 1 to 18 carbon atoms, T is -H, -CN, -F, or -Cl, and the symbol * indicates an asymmetric carbon atom.

These compounds are described in Japanese Patent Application Laid-Open Nos. 190842/1988, 22042/1988, and 216878/1988, etc.

Of course, compounds not represented by any of the above general formulas (A-I), (A-II), (A-III), (A-IV), and (A-V), but falling within the scope defined by the general formula (A) can be used as the component (A).

Of the above compounds, compounds of the general formula (A) wherein $R^1$ is an alkyl group having 5 to 14 carbon atoms, or an alkoxy group having 5 to 14 carbon atoms, and compounds of the general formula (A) wherein $R^2$ is an alkyl group having 4 to 11 carbon atoms, or an alkoxy group having 4 to 11 carbon atoms are preferred. Of these compounds, compounds of the general formula (A) wherein $R^1$ is a linear alkyl group, or a linear alkoxy group, and compounds of the general formula (A) wherein $R^2$ is a linear alkyl group are more preferred.

Typical examples of the compounds represented by the general formula (A) are shown below.

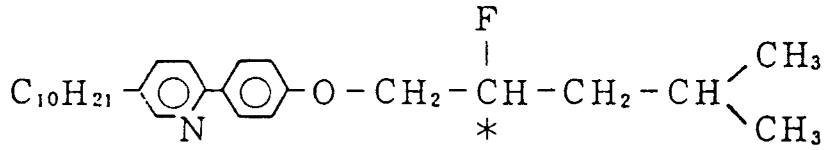

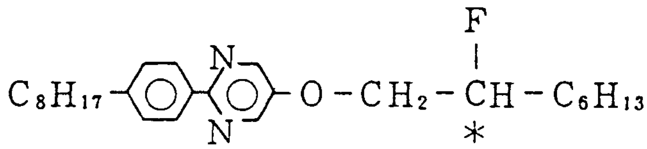

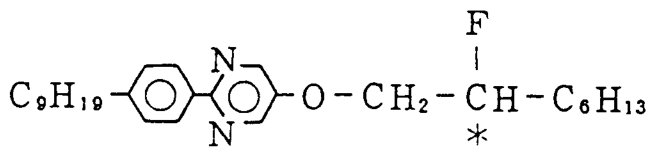

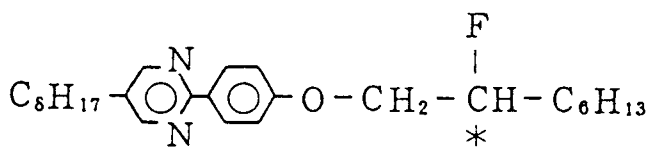

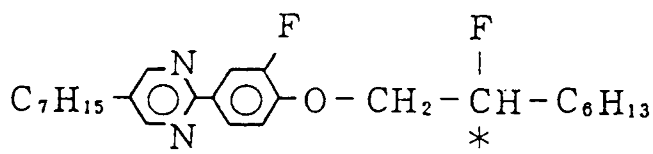

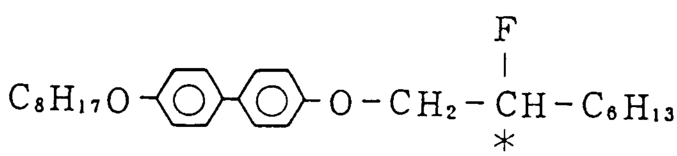

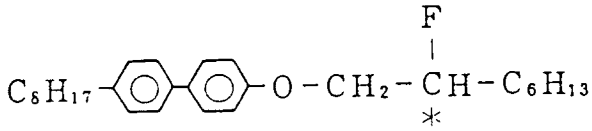

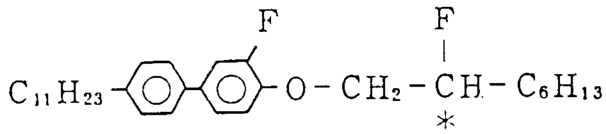

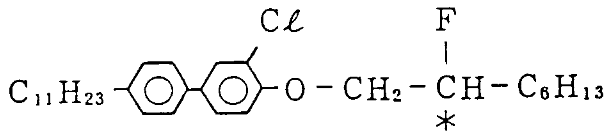

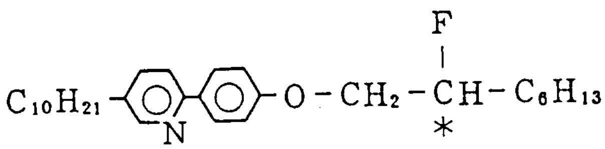

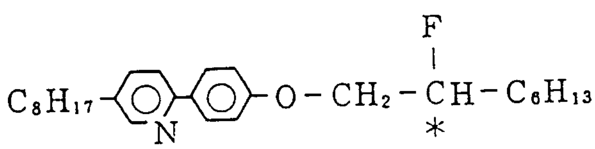

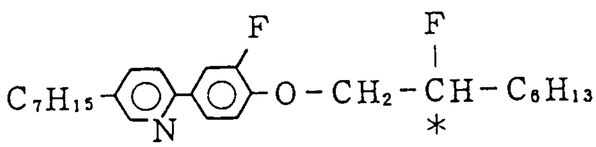

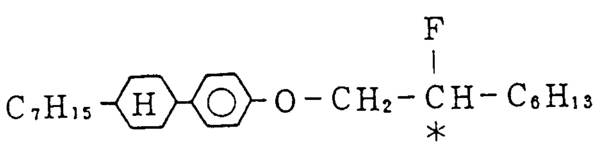

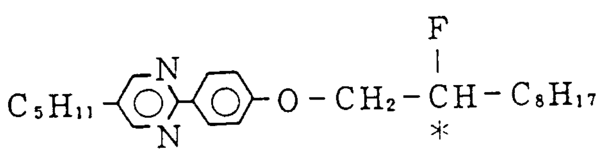

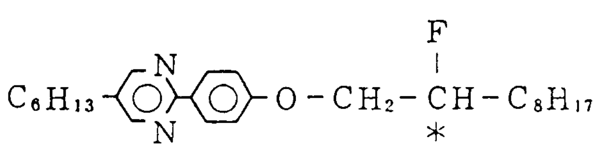

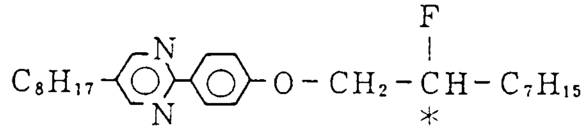

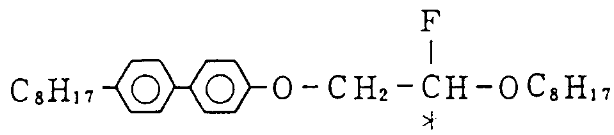

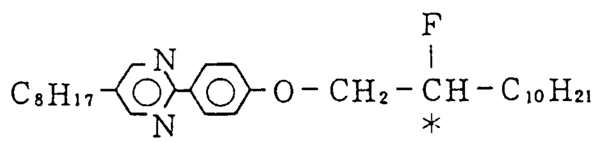

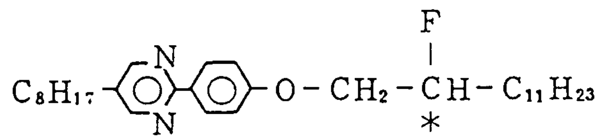

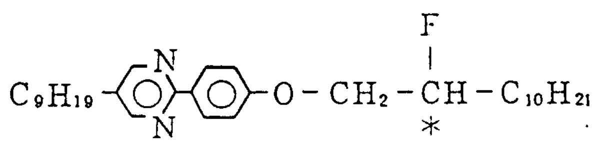

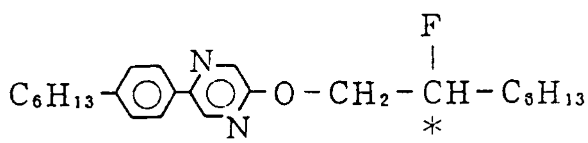

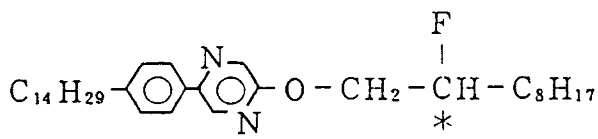

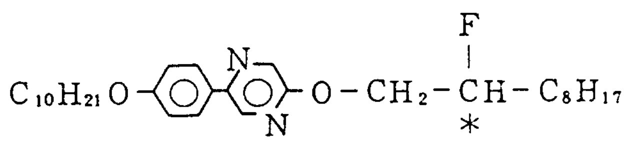

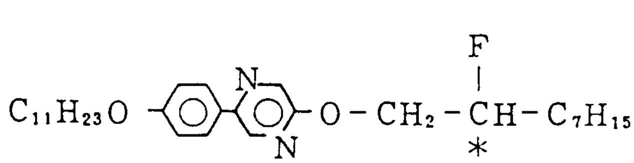

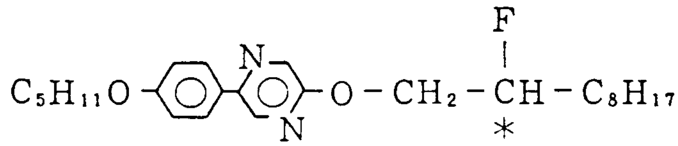

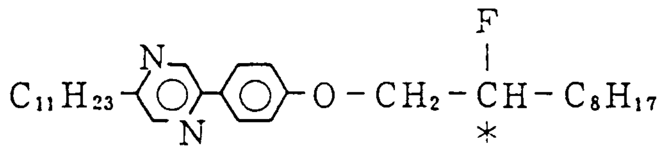

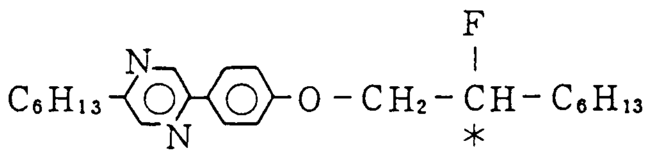

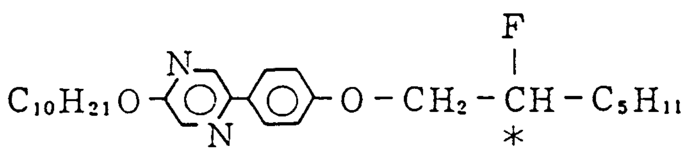

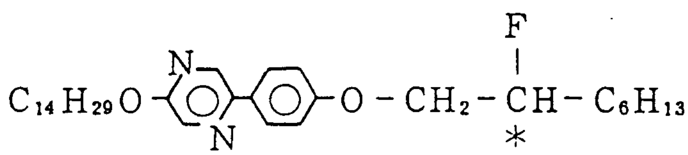

Compounds represented by the general formula (B) to be used as the component (B) are not chiral, but almost all of them have the SC phase. Thus they can be used as base SC compounds.

Specific examples of the compounds represented by the general formula (B) are compounds represented by the general formulas (B-VI) and (B-VII).

General Formula (B-VI):

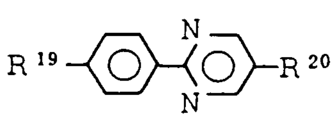

( B − VI )

wherein $R^{19}$ and $R^{20}$ may be the same or different, and are independently a linear or branched alkyl group having 1 to 18 carbon atoms, or a linear or branched alkoxy group having 1 to 18 carbon atoms, or a linear or branched alkanoyloxy group having 1 to 18 carbon atoms.

General Formula (B-VII):

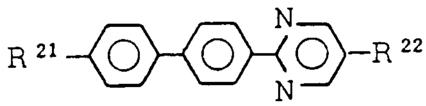

( B − Ⅶ )

wherein $R^{21}$ and $R^{22}$ may be the same or different, and are independently a linear or branched alkyl group having 1 to 18 carbon atoms, or a linear or branched alkoxy group having 1 to 18 carbon atoms.

These compounds are described in Japanese Patent Publication No. 5434/1987, etc.

Of course, compounds not represented by either the general formula (B-VI) or the general formula (B-VII), but falling within the scope defined by the general formula (B), and having the SC phase can be used as the component (B).

As the component (B), compounds of the general formula (B) wherein $\ell + m + n = 1$ or 2 are preferably used, with compounds of the general formula (B) wherein $n = 0$ being particularly preferred.

Of these pyrimidine compounds, compounds of the general formula (B-VI) wherein $R^{19}$ is a linear alkyl group having 5 to 14 carbon atoms, or a linear alkoxy group having 5 to 14 carbon atoms, and $R^{20}$ is a linear alkyl group having 7 to 15 carbon atoms, or a linear alkoxy group having 7 to 15 carbon atoms, and compounds of the general formula (B-VII) wherein $R^{21}$ is a linear alkyl group having 5 to 10 carbon atoms, or a linear alkoxy group having 5 to 10 carbon atoms, and $R^{22}$ is an alkyl group having 5 to 10 carbon atoms are preferred.

Typical examples of the compounds represented by the general formula (B) are shown in Tables 1 to 3.

Table 1

Compounds represented by 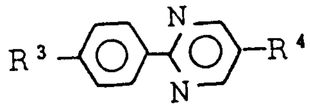

| $R^3$ | $R^4$ |
|---|---|
| $C_6H_{13}O$- | $C_8H_{17}$-, $C_9H_{19}$-, $C_{10}H_{21}$-, $C_{11}H_{23}$- |
| $C_8H_{17}O$- | $C_9H_{19}$-, $C_{10}H_{21}$-, $C_{11}H_{23}$- |
| $C_9H_{19}O$- | $C_7H_{15}$-, $C_8H_{17}$-, $C_9H_{19}$-, $C_{10}H_{21}$- |
| $C_{10}H_{21}O$- | $C_8H_{17}$- |
| $C_{11}H_{23}O$- | $C_7H_{15}$-, $C_8H_{17}$- |
| $C_7H_{15}O$- | $C_9H_{19}$-, $C_{10}H_{21}$-, $C_{11}H_{23}$- |
| $C_8H_{17}O$- | $C_8H_{17}$- |
| $C_{12}H_{25}O$- | $C_7H_{15}$-, $C_8H_{17}$- |
| $C_5H_{11}COO$- | $C_8H_{17}$- |
| $C_6H_{13}COO$- | $C_8H_{17}$- |
| $C_7H_{15}COO$- | $C_8H_{17}$- |
| $C_8H_{17}COO$- | $C_8H_{17}$- |
| $C_9H_{19}COO$- | $C_8H_{17}$- |
| $C_{10}H_{21}COO$- | $C_8H_{17}$- |

Table 1 (cont'n)

| $R^3$ | $R^4$ |
|---|---|
| $C_{11}H_{23}COO-$ | $C_8H_{17}-$ |
| $C_6H_{13}-$ | $C_7H_{15}O-$, $C_8H_{17}O-$, $C_9H_{19}O-$, $C_{10}H_{21}O-$, $C_{11}H_{23}O-$, $C_{12}H_{25}O-$, $C_{13}H_{27}O-$, $C_{14}H_{29}O-$, $C_{15}H_{31}O-$ |
| $C_7H_{15}-$ | $C_7H_{15}O-$, $C_8H_{17}O-$, $C_9H_{19}O-$, $C_{10}H_{21}O-$, $C_{11}H_{23}O-$, $C_{12}H_{25}O-$ |
| $C_8H_{17}-$ | $C_7H_{15}O-$, $C_8H_{17}O-$, $C_9H_{19}O-$, $C_{10}H_{21}O-$, $C_{11}H_{23}O-$, $C_{12}H_{25}O-$, $C_{13}H_{27}O-$ |
| $C_9H_{19}-$ | $C_8H_{17}O-$, $C_9H_{19}O-$, $C_{10}H_{21}O-$, $C_{11}H_{23}O-$, $C_{12}H_{25}O-$, $C_{13}H_{27}O-$ |
| $C_{10}H_{21}-$ | $C_8H_{17}O-$, $C_9H_{19}O-$, $C_{10}H_{21}O-$, $C_{11}H_{23}O-$, $C_{12}H_{25}O-$ |

Table 2

Compounds represented by 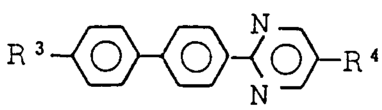

| $R^3$ | $R^4$ |
|---|---|
| $C_5H_{11}-$ | $C_6H_{13}-$, $C_7H_{15}-$, $C_8H_{17}-$ |
| $C_6H_{13}-$ | $C_6H_{13}-$, $C_7H_{15}-$, $C_8H_{17}-$ |
| $C_7H_{15}-$ | $C_6H_{13}-$, $C_7H_{15}-$, $C_8H_{17}-$ |
| $C_8H_{17}-$ | $C_6H_{13}-$, $C_7H_{15}-$, $C_8H_{17}-$, |
| $C_5H_{11}O-$ | $C_6H_{13}-$, $C_7H_{15}-$, $C_8H_{17}-$ |
| $C_6H_{13}O-$ | $C_6H_{13}-$, $C_7H_{15}-$, $C_8H_{17}-$ |
| $C_7H_{15}O-$ | $C_6H_{13}-$, $C_7H_{15}-$, $C_8H_{17}-$ |
| $C_8H_{17}O-$ | $C_6H_{13}-$, $C_7H_{15}-$, $C_8H_{17}$ |

Table 3

Compounds represented by 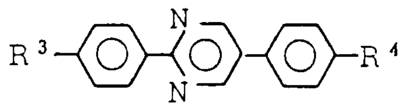

| $R^3$ | $R^4$ |
|---|---|
| $C_3H_7$- | $C_3H_7O$- |
| $C_4H_9$- | $C_4H_9O$-, $C_5H_{11}O$-, $C_9H_{19}O$- |
| $C_5H_{11}$- | $C_5H_{11}O$-, $C_6H_{13}O$- |
| $C_6H_{13}$- | $C_5H_{11}O$-, $C_6H_{13}O$- |
| $C_7H_{15}$- | $C_5H_{11}O$-, $C_7H_{15}O$- |
| $C_8H_{17}$- | $C_5H_{11}O$-, $C_6H_{13}O$-, $C_8H_{17}O$- |
| $C_9H_{19}$- | $C_9H_{19}O$- |
| $C_{10}H_{21}$- | $C_5H_{11}O$-, $C_9H_{19}O$-, $C_{10}H_{21}O$- |
| $C_5H_{11}O$- | $C_5H_{11}$-, $C_6H_{13}$- |
| $C_4H_9O$- | $C_4H_9O$- |
| $C_5H_{11}O$- | $C_5H_{11}O$- |
| $C_6H_{13}O$- | $C_6H_{13}O$- |
| $C_7H_{15}O$- | $C_7H_{15}O$- |
| $C_8H_{17}O$- | $C_8H_{17}O$- |

Pyrimidine compounds of the general formula (B) which are to be used as the component (B) of the ferroelectric liquid crystal composition of the present invention are preferred to have the SC phase. However, compounds represented by the general formula (B) but not having the SC phase can be used in an amount that does not markedly narrow the SC temperature range of the resulting base SC mixture.

As the base SC compound in the ferroelectric liquid crystal composition of the present invention, two or more of the phenylpyrimidine compounds having the SC phase as listed in Tables 1 to 3 can be used in combination with one another, and moreover one or more of the phenylpyrimidine compounds can be used in combination with one or more of known non-chiral compounds within an range that does not deteriorate the effects of the present invention. As such known non-chiral compounds, biphenylylbenzoate-, biphenylylcyclohexane-, azo-, azoxy-, phenylpyridine-, and biphenyl-based liquid crystal compounds rich in the smectic C property can be listed.

Compounds represented by the general formula (C-a) to be used as the component (C) are chiral compounds, have a phase, e.g., the SC* phase, and have helical structure that is twisted in the opposite direction relative to that of the compounds represented by the general formula (A) to be used as the component (A). Thus they can be used as helical pitch controlling agents.

Compounds represented by the general formula (C-b) and having an absolute configuration of the R type relative to the asymmetric carbon atom are used as helical pitch controlling agents, because the twist angle of the helix in the SC* phase is opposite to that of the component (A) compound.

Specific examples of the compounds represented by the general formulas (C-a) and (C-b) are compounds represented by the following general formulas (C-a-VIII), (C-a-IX), (C-a-XII), (C-b-X), and (C-b-XI).

General Formula (C-a-VIII):

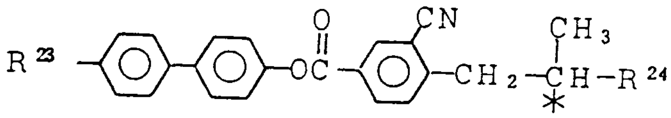

(C-a-VIII)

wherein $R^{23}$ is an alkyl group having 1 to 18 carbon atoms, or an alkoxy group having 1 to 18 carbon atoms, $R^{24}$ is an alkyl group having 2 to 18 carbon atoms, and the symbol * indicates an asymmetric carbon atom.

General Formula (C-a-IX):

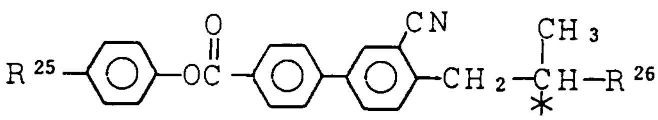

(C-a-IX)

wherein $R^{25}$ is an alkyl group having 1 to 18 carbon atoms, or an alkoxy group having 1 to 18 carbon atoms, $R^{26}$ is an alkyl group having 2 to 18 carbon atoms, and the symbol * indicates an asymmetric carbon atom.

General Formula (C-a-XII):

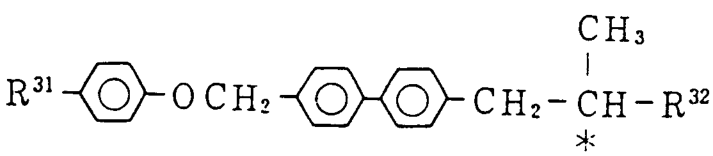

(C-a-XII)

wherein $R^{31}$ is an alkyl group having 1 to 18 carbon atoms, or an alkoxy group having 1 to 18 carbon atoms, $R^{32}$ is an alkyl group having 2 to 18 carbon atoms, and the symbol * indicates an asymmetric carbon atom.

General Formula (C-b-X):

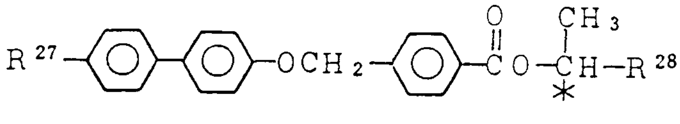

(C-b-X)

wherein $R^{27}$ is an alkyl group having 1 to 18 carbon atoms, or an alkoxy group having 1 to 18 carbon atoms, $R^{28}$ is an alkyl group have 2 to 18 carbon atoms, and the symbol * indicates an asymmetric carbon atom.

General Formula (C-b-XI):

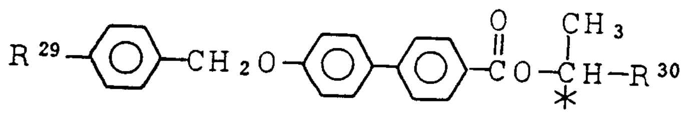

(C−b−XI)

wherein $R^{29}$ is an alkyl group having 1 to 18 carbon atoms, or an alkoxy group having 1 to 18 carbon atoms, $R^{30}$ is an alkyl group having 2 to 18 carbon atoms, and the symbol * indicates an asymmetric carbon atom.

These compounds are described in Japanese Patent Application Laid-Open Nos. 233966/1988, and 149547/1985, etc.

Of course, compounds not represented by any of the above general formulas (C-a-VIII) to (C-b-XI), but falling within the scope defined by the general formula (C-a) or (C-b) can be used as the component (C).

Typical examples of the compunds represented by the general formulas (C-a) and (C-b) are shown below.

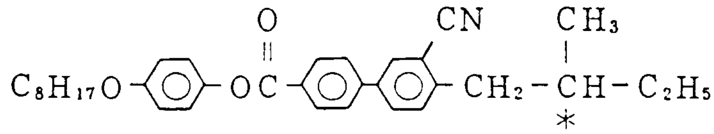

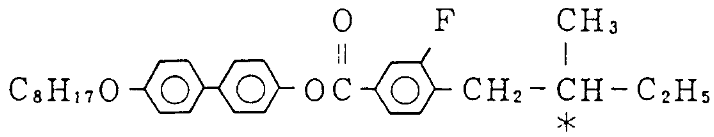

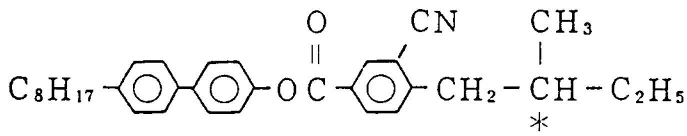

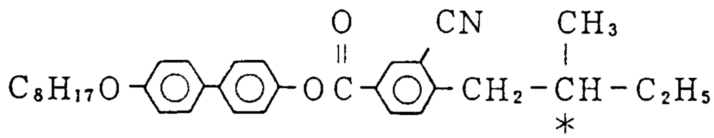

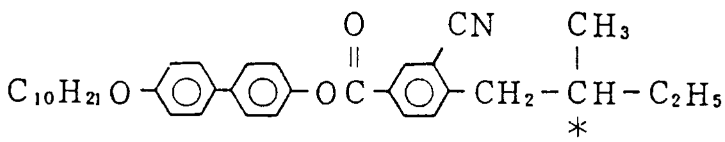

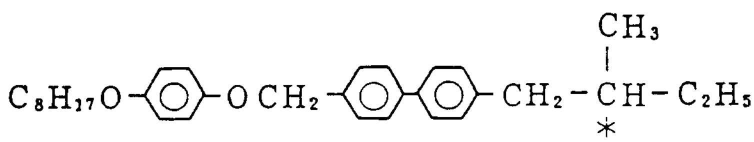

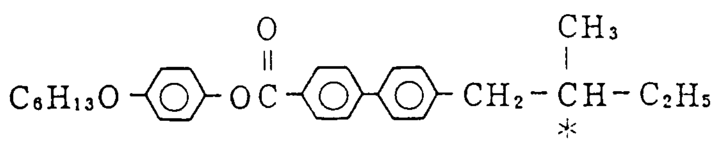

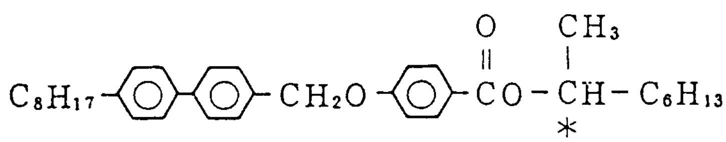

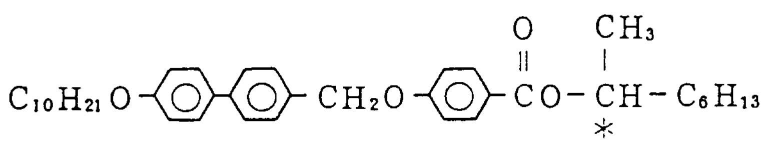

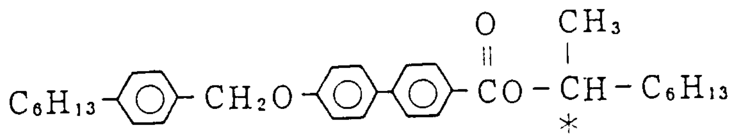

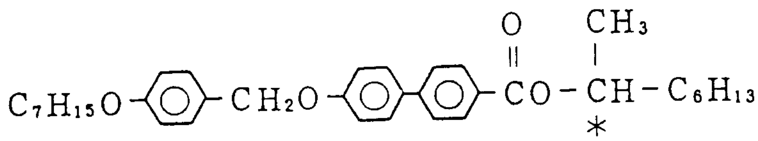

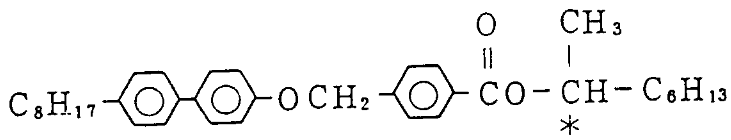

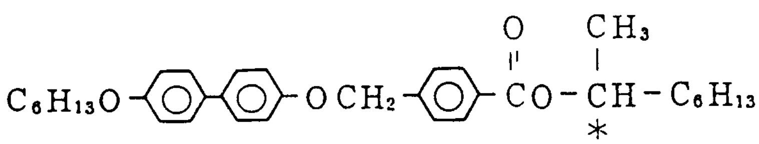

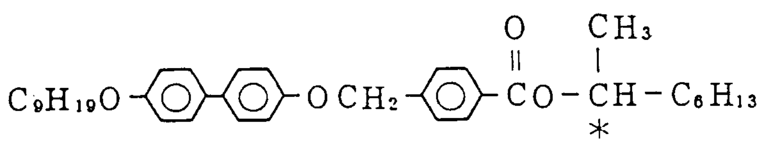

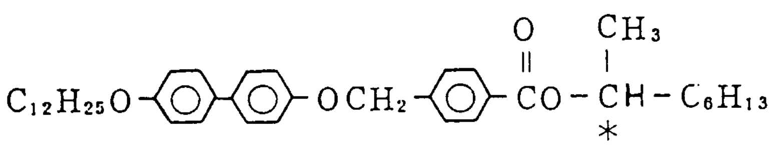

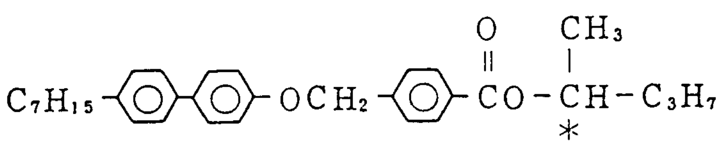

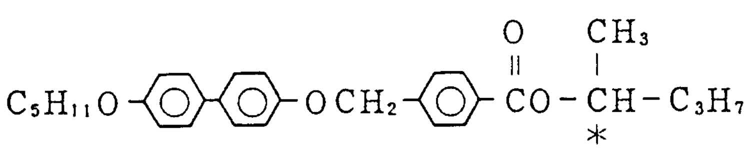

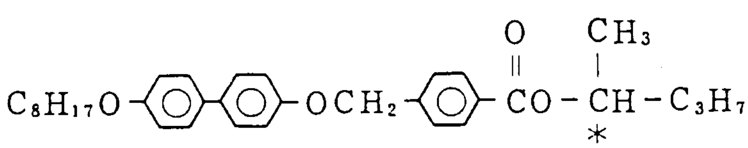

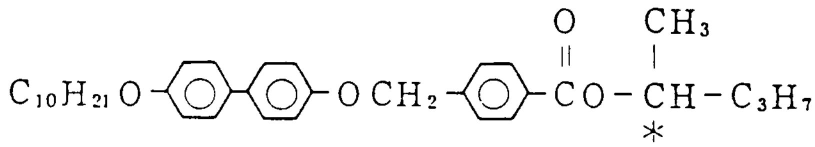

Excellent characteristics of compounds to be used as the component (A), (B) or (C) of the ferroelectric liquid crystal composition of the present invention will hereinafter be explained in detail referring to the compounds represented by the general formulas (A-I), (A-II), (A-III), (A-IV), (A-V), (B-VI), (B-VII), (C-a-VIII), (C-a-IX), (C-a-XII), (C-b-X), and (C-b-XI).

In the compounds represented by the general formulas (A-I), (A-II), (A-III), (A-IV) and (A-V), the spontaneous polarization value (hereinafter abbreviated to "PS") is very large.

For example, in a compound of the general formula (A-II) wherein $R^{11} = C_8H_{17}O-$ , $R^{12} = -C_6H_{13}$, the phase transition temperature is:

Cr 63 SC* 92 SA 97 ISO,

and PS is 94 nC/cm$^2$ (at T-TC = -10 °C). That is, the above compound has the SC* phase and a large spontaneous polarization value.

In general, a spontaneous polarization value, viscosity ($\eta$), and response time ($\tau$) of a ferroelectric liquid crystal composition have the following relation:

$$\tau = \frac{\eta}{PS \times E}$$

where E indicates an electric field applied across a a liquid crystal cell.

Thus, compounds of low viscosity and at the same time, having a large spontaneous polarization value are desired.

The compounds represented by the general formulas (A-I) to (A-V) generally have characteristics as described above, and thus greatly contribute to the quick response of the ferroelectric liquid crystal composition of the present invention.

To demonstrate the characteristics of compounds represented by the general formulas (A-I), (A-II), (A-III), (A-IV), and (A-V), the following chiral compounds (a) to (g) are chosen from the compounds represented by the general formulas (A-I) to (A-V).

Compound (a):

(S) 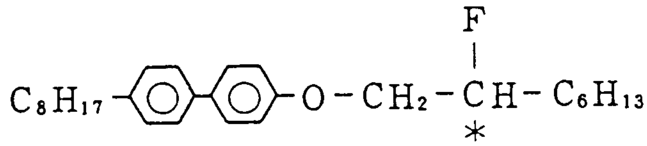

Compound (b):

(S) 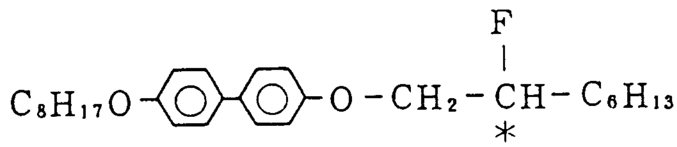

Compound (c):

(S) 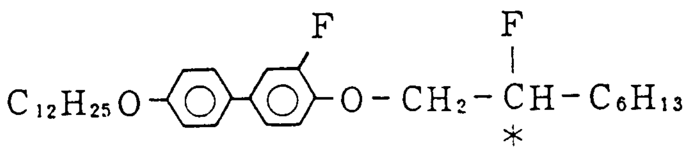

Compound (d):

(S) 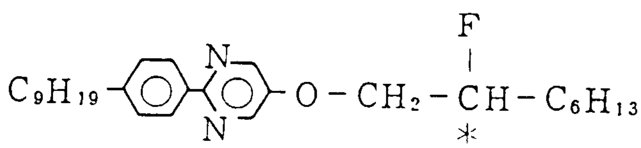

Compound (e):

(S) 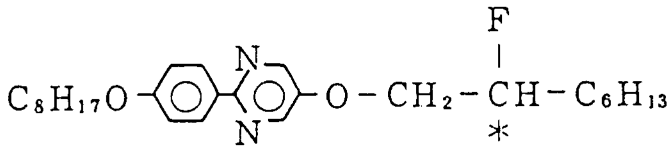

Compound (f):

(S) 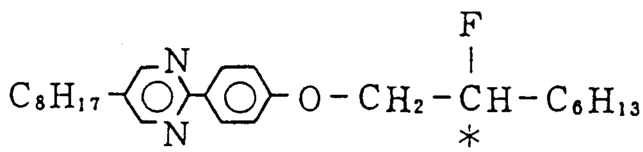

Compound (g):

(S) 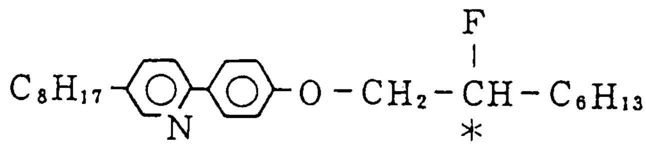

Each of the above chiral compounds is added to a base SC mixture consisting of non-chiral pyrimidine-based liquid crystal compounds:

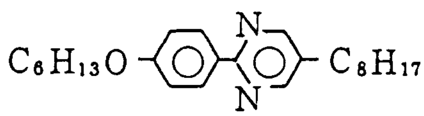

30 wt%,

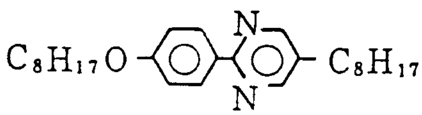

20 wt%,

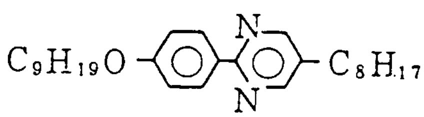

10 wt%,

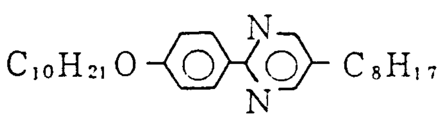

10 wt%,

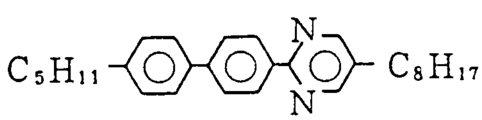

20 wt%,

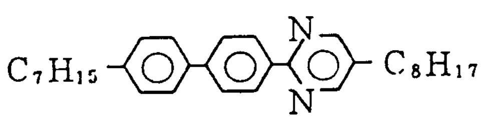

10 wt%,

selected from the compounds represented by the general formulas (B-VI) and (B-VII), and having the following phase transition temperature:

Cr 4 SC 65 SA 79 N 90 ISO,

in a proportion of 20% by weight.

Each ferroelectric liquid crystal composition as prepared above is measured for phase transition temperature, spontaneous polarization value, tilt angle, and response time.

The temperature of measurement of the spontaneous polarization value, tilt angle, and response time is 25 °C. The electric field strength for measurement of the response time is 5 V/μm.

The results are shown in Table 4.

Table 4

| Chiral Compound | Phase Transition Temperature (°C) | | | | | | | | | Spontaneous Polarization Value (nC/cm²) | Tilt Angle (°) | Response Time (μsec) |
|---|---|---|---|---|---|---|---|---|---|---|---|---|
| | Cr | | SC* | | SA | | N* | | ISO | | | |
| a | · | 10 | · | 57 | · | 80 | · | 84 | · | 16 | 19 | 51 |
| b | · | ≃ 40 | · | 68 | · | 84 | · | 89 | · | 9 ** | 19 ** | 21 ** |
| c | · | 0 | · | 45 | · | 82 | - | | · | 7 | 14 | 57 |
| d | · | 5 | · | 61 | · | 82 | · | 87 | · | 8 | 21 | 55 |
| e | · | 5 | · | 74 | · | 82 | · | 92 | · | 12 | 26 | 42 |
| f | · | 3 | · | 59 | · | 76 | · | 85 | · | 19 | 21 | 69 |
| g | · | 3 | · | 68 | · | 78 | · | 87 | · | 20 | 23 | 57 |

** Measured at 50°C.

It can be seen from Table 4 that mixing of the chiral compounds as the component (A) as selected from the compounds represented by the general formulas (A-I) to (A-V) with the non-chiral compounds as the component (B) as selected from the compounds represented by the general formulas (B-VI) and (B-VII) provides ferroelectric liquid crystal compositions exhibiting quick response (about 50 μsec). This response

time is about 1/10 of the response time obtained in the aforementioned References A and B.

Of the chiral compounds represented by the general formula (A) to be used as the component (A) in the ferroelectric liquid crystal composition of the present invention, compounds having the SC* phase are preferably used. However, even compounds not having the SC* phase can be used unless they markedly narrow the temperature range within which the resulting composition has the SC* phase.

As described above, the component (A) plays an important role in exhibition of the quick response of the resulting ferroelectric liquid crystal composition. Thus the content of the component (A) is suitable to be at least 5% by weight. However, if the content of the component (A) is too large, a spontaneous polarization value of the resulting ferroelectric liquid crystal composition is increased to more than 20 $nC/cm^2$. Thus the content of the component (A) is desired to be not more than 25% by weight.

The foregoing explanation is made referring to the case that the compounds of the component (A) are compounds whose absolute configuration relative to the asymmetric carbon center is of the S type.

When the absolute configuration of a compound represented by the general formula (A-I), (A-II), (A-III), (A-IV), or (A-V) is of the S type, a sign of spontaneous polarization is minus (-), and the helical twist sense is left-handed. On the other hand, in the case of a compound having an absolute configuration of the R type, even if it is a compound represented by the same general formula, the sign of spontaneous polarization is plus (+), and the helical twist sense is right-handed.

Accordingly, if compounds having different absolute configurations relative to the asymmetric center from each other are used in combination as the component (A), they counteract in the spontaneous polarization and the twist of helix, and a small PS value and a long helical pitch result.

In the ferroelectric liquid crystal composition of the present invention, compounds having the same type of absolute configuration are preferably used as the component (A), because they do not reduce the total spontaneous polarization.

The case that compounds whose absolute configuration is of the R type are used as the component (A) will be described later.

The compounds represented by the general formulas (B-VI) and (B-VII) to be used as the component (B) are non-chiral compounds, and act as base SC compounds in the ferroelectric liquid crystal composition of the present invention.

The compounds represented by the general formula (B-VI) have the SC phase in a lower temperature region. For example, in the case of a compound of the general formula (B-VI) wherein $R^{19} = C_6H_{13}O$-, $R^{20} = C_8H_{17}$-, the phase transition sequence is as follows:

Cr 28 Sc 47 SA 58 N 66 ISO.

On the other hand, the compounds represented by the general formula (B-VII) have the SC phase in a higher temperature region. For example, in the case of a compound of the general formula (B-VII) wherein $R^{21} = C_7H_{15}$-, $R^{22} = C_8H_{17}$-, the phase transition sequence is as follows:

Cr 58 SC 134 SA 144 N 157 ISO.

Thus, if a compound of the general formula (B-VI) and a compound of the general formula (B-VII) are used in combination, there can be obtained a base SC mixture having the SC phase over a wide temperature range from a lower temperature to a higher temperature.

Excellent characteristics of the compounds having this core structure are described in the aforementioned Reference A, for example. Because of very low viscosity, they play an important role as base SC compounds in the ferroelectric liquid crystal composition of the present invention.

As described above, the component (B) acts as a base SC compound in the ferroelectric liquid crystal composition of the present invention. Thus the content of the component (B) is desired to be not less than 60% by weight.

The compounds represented by the general formulas (C-a-VIII), (C-a-IX), (C-a-XII), (C-b-X), and (C-b-XI) to be used as the component (C) are chiral compounds, and their spontaneous polarization values are not so large. In these compounds, however, the helix is twisted in the opposite direction to that of the compounds to be used as the component (A). Thus the compounds of the above general formulas (C-a-VIII) to (C-b-XI) act to control the helical pitch.

In the compounds represented by the general formulas (C-a-VIII) and (C-a-IX), when the absolute configuration of an optically active site is of the S type, the sign of spontaneous polarization is minus (-), and the helical twist sense is right-handed. On the contrary, when the absolute configuration of an optically active site is of the R type, the sign of spontaneous polarization is plus (+), and the helical twist sense is left-handed.

In the compounds represented by the general formula (C-a-XII), when the absolute configuration of an optically active site is of the S type, the sign of spontaneous polarization is plus (+), and the helical twist sense is right-handed. On the contrary, when the absolute configuration of an optically active site is of the R

type, the sign of spontaneous polarization is plus (+), and the helical twist sense if left-handed.

On the other hand, in the compounds, reprsented by the general formulas (C-b-X) and (C-b-XI), when the absolute configuration of an optically active site is of the R type, the sign of spontaneous polarization is minus (-), and the helical twist sense if right-handed. On the contrary, when the absolute configuration of an optically active site is of the S type, the sign of spontaneous polarization is plus (+), and the helical twist sense is left-handed.

Thus, when a compound selected from the compounds represented by the general formulas (A-I), (A-II), (A-III), (A-IV), and (A-V) which is to be used as the component (A) is of the S type, if the compound is used in combination with a compound selected from the compounds represented by the general formulas (C-a-VIII) and (C-a-IX), and having an absolute configuration of the S type, or a compound selected from the compunds represented by the general formulas (C-b-X) and (C-b-XI), and having an absolute configuration of the R type, each compound being to be used as the component (C), there can be obtained a ferroelectric liquid crystal composition having a long helical pitch.

As apparent from the foregoing description, when a compound represented by the general formula (A) and having an absolute configuration of the R type is used as the component (A), a compound represented by the general formula (C-a) and having an absolute configuration of the R type, or a compound represented by the general formula (C-b) and having an absolute configuration of the S type is used as the component (C) to control a helical pitch of the resulting ferroelectric liquid crystal composition.

To align a ferroelectric liquid crystal composition by employing the surface treating method commonly used at the present time, as it is, it is necessary, as described above, to provide the ferroelectric liquid crystal composition with the N* phase. It is known that a compositioon having a longer helical pitch in the N* phase is easier to be aligned in the SC* phase (see, for example, Japanese Patent Application Laid-Open No. 255323/1986).

Helical pitches in the N* and SC* phases of each composition shown in Table 4 are shown in Table 5.

Table 5

| Type of Chiral Compound | Helical Pitch in N* Phase ($\mu$m) | Helical Pitch in SC* Phase ($\mu$m) |
|---|---|---|
| (a) | 2.5 | 2.5 |
| (b) | 2.1 | - |
| (c) | - | 1.6 |
| (d) | 1.5 | 2.0 |
| (e) | 1.9 | 2.0 |
| (f) | 1.1 | 1.8 |
| (g) | 1.3 | 1.9 |

The helical pitch in the SC* phase was measured at 25°C, and the helical pitch in the N* phase was measured in the neighborhood of the SA-N* phase transition temperature.

Although the compositions shown in Table 4 are very satisfactory for practical use in respect of the SC* phase temperature range, and the response time, a problem arises in fabricating a cell using them. In a liquid crystal composition consisting only of a chiral compound as the component (A) as selected from the compunds represented by the general formulas (A-I) to (A-V), and a non-chiral compound as the component (B) as selected from the compounds represented by the general formulas (B-VI) to (B-VII), as described above, the helical pitch in the N* phase or the helical pitch in the SC* phase is short. Thus, in aligning the above liquid crystal composition, the surface treating method commonly used at the present time cannot be employed as it is.

The cell thickness that is believed usable in ferroelectric liquid crystal display devices is 2 to 3 $\mu$m. In order that the helical structure in the N* phase disappear in a cell having a thickness falling within the above range, it is necessary that the helical pitch in the N* phase of the liquid crystal material be more than 8 to 12 $\mu$m. In this cell, when a liquid crystal material having a helical pitch in the SC* phase of less than 2 to 3 $\mu$m is used, the helical structure is sometimes produced in the SC* phase.

In the compositions shown in Table 4, the helical pitch in the SC*phase are generally about 2 $\mu$m; their helical pitches in the SC* phase are at the very point that the helical structure is produced or not produced in the above cell. In practical use, therefore, the compositions shown in Table 4 are required to have a much longer helical pitch in the SC* phase.

As described above, although the compositions shown in Table 4 are excellent in response properties, their helical pitches in the SC* and N* phases are not sufficiently long for aligning the liquid crystal molecules according to the surface treating method.

Lengthening the helical pitches in the SC* and N* phases of the above compositions while maintaining the excellent response properties thereof can be attained by adding the component (C).

This will hereinafter be explained in detail.

For example, when a compound having the following chemical formula:

(R) 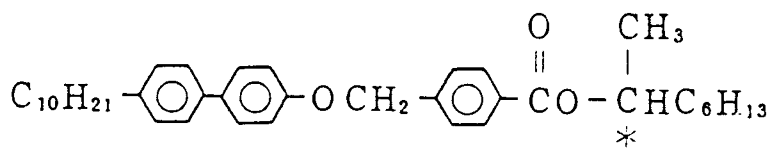

which is one of the compounds represented by the general formula (C-b-X) is added to the composition containing the chiral compound (e) shown in Table 4 in a proportion of 3% by weight, the helical pitches in the N* and SC* phases of the resulting ferroelectric liquid crystal composition become 23 μm and 5μm, respectively. This ferroelectric liquid crystal composition has a PS value of 11 $nC/cm^2$, a tilt angle of 27°, and a response time of 63 μsec, and its phase transition sequence is as follows:

Cr 0 SC* 69 SA 76 N* 90 ISO.

When a compound having the following chemical formula:

(S) 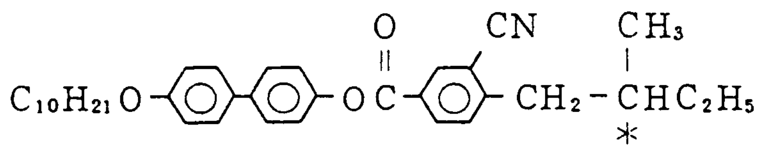

which is one of the compounds represented by the general formula (C-a-VIII) is added to the composition containing the chiral compound (d) shown in Table 4 in a proportion of 5% by weight, the helical pitches in the N* and SC* phases of the resulting ferroelectric liquid crystal composition becomes 14 μm and 7 μm, respectively. This ferroelectric liquid crystal composition has a PS value of 9 $nC/cm^2$, a tilt angle of 24°, and a response time of 65 μsec, and its phase transition sequence is as follows:

Cr -2 SC* 72 SA 82 N* 94 ISO.

In this manner, addition of the component (C) to a mixture of the components (A) and (B) permits to obtain a ferroelectric liquid crystal composition having aligning characteristics suitable for practical use while maintaining the response properties of the mixture.

The ferroelectric liquid crystal composition of the present invention, exhibiting quick response and having suitable aligning characteristics is obtained by mixing a compound of the component (A) having quick response properties and a compound of the component (C) as a helical pitch controlling agent, and further adding thereto a compound of the component (B) which is a less viscous smectic C liquid crystal.

In the present invention, the component (C) acts as a helical pitch controlling agent, ard its spontaneous polarization is relatively small. Thus the proportion of the component (C) is desired to be not more than 15% by weight. Moreover, for the purpose of using the component (C) as a helical pitch controlling agent for the component (A), the proportion of the component (C) is desired to be at least 2% by weight.

In order to obtain the ferroelectric liquid crystal composition of the present invention having excellent characteristics, making the best use of the characteristics of the components (A), (B), and (C), the proportions of the components (A), (B), and (C) are 5 to 25% by weight, 60 to 90% by weight, and 2 to 15% by weight, respectively, based on the total weight of the components (A), (B), and (C).

The ferroelectric liquid crystal composition of the present invention exhibits quick response even though its spontaneous polarization value is not more than 20 $nC/cm^2$, and exhibits the SC* phase over a wide temperature range including room temperature.

A light switching device using the ferroelectric liquid crystal composition of the present invention shows a switching operation with a very high contrast in both the birefringence display mode and the guest-host display mode, and is a quick response liquid crystal display device.

The present invention is described in greater detail with reference to the following examples, although it is not intended to be limited thereto.

Characteristics values of ferroelectric liquid crystal compositions were measured by the methods described below.

Magnitude of Spontaneous Polarization (PS)

Measured by the Sawyer-Tower method.

Helical Pitch in SC* Phase (P)

A composition sample was filled in a cell having a thickness of about 200 μm and subjected to homogeneous aligning, and its helical pitch was determined by directly measuring a distance between dechiralization lines corresponding to the helical pitch under a polarizing microscope.

Helical Pitch in N* Phase

Measured by the Cano's wedge cell method in the neighborhood of SA-N* phase transition point.

Tilt Angle ($\theta$)

A composition sample was filled in a cell subjected to homogeneous aligning, and a sufficiently high electric field above the critical electric field was applied across the cell to disappear the helical structure. Further, there was measured an angle (corresponding to $2\theta$) between two extinction positions which were made under crossed nicols when the polarity of the field was reversed.

Response Time

A composition sample was filled in a cell having a thickness of 2 μm and being subjected to aligning treatment, and a change in intensity of transmitted light was measured when a rectangular pulse of 10 V and 100 Hz was applied. From this change, the response time was determined.

Examples 1 to 5

Ferroelectric liquid crystal compositions having the formulations shown in Table 6 were prepared, and their characteristic values are shown in Table 7.

All values in Table 6 are in % by weight.

Table 6

| Component | Compound | Example 1 | 2 | 3 | 4 | 5 |
|---|---|---|---|---|---|---|
| (A) | (S) 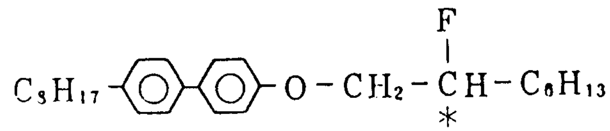 | 5 | - | - | 5 | - |
| | (S) 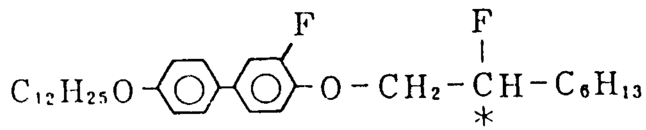 | - | 5 | - | - | 2.5 |
| | (S) 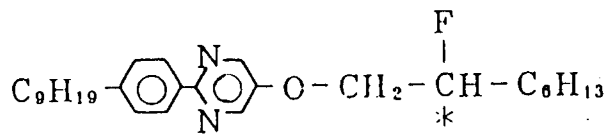 | 5 | - | 5 | 5 | 5 |
| | (S) 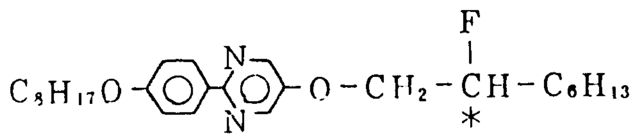 | 10 | 5 | 10 | 5 | 10 |
| | (S) 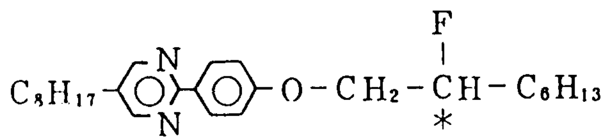 | - | 5 | - | 2.5 | - |

Table 6 (cont'n)

| Component | Compound | Example 1 | 2 | 3 | 4 | 5 |
|---|---|---|---|---|---|---|
| (B) | 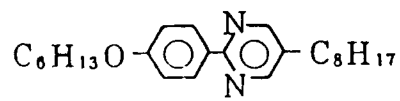 | 26 | 28 | 28 | 28 | 26 |
| | 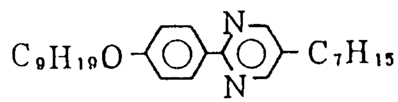 | 7.5 | 8 | 8 | 8 | 7.5 |
| | 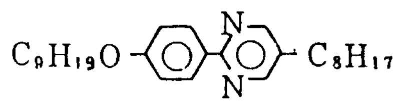 | 15 | 16 | 16 | 16 | 15 |
| | 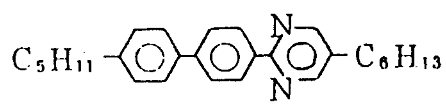 | 15 | 16 | - | 16 | 15 |
| | 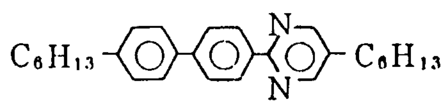 | - | - | 16 | - | - |

Table 6 (cont'n)

| Component | Compound | Example 1 | 2 | 3 | 4 | 5 |
|---|---|---|---|---|---|---|
| (B) | 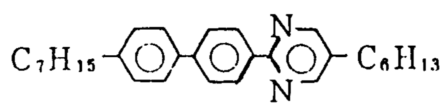 | 11.5 | - | 12 | 12 | 11.5 |
| | 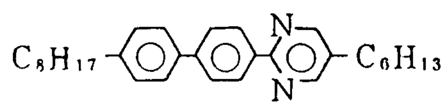 | - | 14.5 | - | - | - |
| (C) | (S) 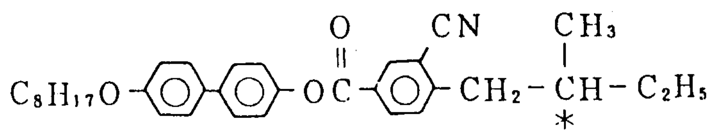 | 5 | - | - | 2.5 | 5 |
| | (S) 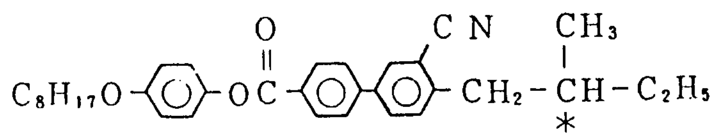 | - | - | 5 | - | - |

Table 6 (cont'n)

| Component | Compound | Example 1 | 2 | 3 | 4 | 5 |
|---|---|---|---|---|---|---|
| (C) | (R) 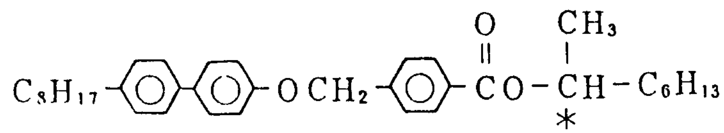 | - | 2.5 | - | - | - |
| | (R) 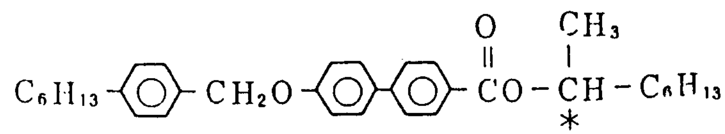 | - | - | - | - | 2.5 |

Table 7

| Phase Transition Temperature (°C) | | Example 1 | Example 2 | Example 3 | Example 4 | Example 5 |
|---|---|---|---|---|---|---|
| Cr | SC* | -7 | -5 | -6 | -5 | -3 |
| SC* | SA | 72 | 71 | 73 | 69 | 74 |
| SA | N* | 80 | 78 | 78 | 78 | 88 |
| N* | ISO | 92 | 93 | 93 | 92 | 97 |
| Spontaneous Polarization 1) ($nC/cm^2$) | | 15 | 9 | 10 | 11 | 9 |
| Tilt Angle 1) (°) | | 26 | 27 | 27 | 24 | 25 |
| Helical Pitch in SC* Phase 1) (μm) | | 10 | 5 | 8 | 5 | 6 |
| Helical Pitch in N* Phase 2) (μm) | | 18 | 20 | 12 | 34 | 15 |
| Response Time 1) (μsec) | | 67 | 80 | 93 | 86 | 77 |

1) Measured at 25°C.
2) Measured in the neighborhood of SA-N* phase transition temperature.

Example 6

A liquid crystal cell was produced by filling the ferroelectric liquid crystal composition prepared in Example 1 into a cell having a cell gap of 2 μm and provided with a pair of electrodes coated with polyimide as an aligning agent which was subjected to parallel treatment by rubbing.

This liquid crystal cell was sandwiched between two polarizers disposed in the crossed nicol state. Upon application of a low frequency pulse of 0.5 Hz and 20 V, there was observed a switching operation which was very good in contrast (1:20), and the response time was 35 μsec at 25°C.

In this way, a liquid crystal display device having a quick response was obtained.

Example 7

A guest-host type composition was prepared by adding Anthraquinone Dye D-16 (produced by BDH Corp.) having the chemical formula:

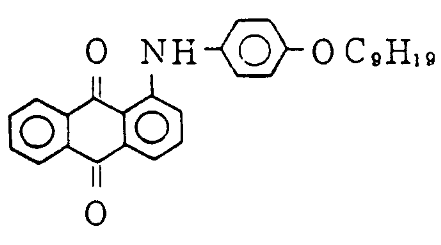

to the ferroelectric liquid crystal composition prepared in Example 3 in a proportion of 3% by weight. This composition was filled in a cell subjected to the same treatment as in Example 6, and having a cell gap of 8 μm, and one polarizer was disposed so that the polarizing surface was parallel to the molecular axis. Upon of application of low frequency AC current of 0.5 Hz and 40 V, there was observed a switching operation which was very good in contract (1:10), and the response time was 100 μsec at 25°C.

In this way, a color liquid crystal display device having a quick response was obtained.

Examples 8 to 12

Ferroelectric liquid crystal compositions having the formulations shown in Table 8 were prepared, and their characteristic values are shown in Table 9. All values in Table 8 are in % by weight.

Table 8

| Component | Compound | Example 8 | 9 | 10 | 11 | 12 |
|---|---|---|---|---|---|---|
| (A) | (S) 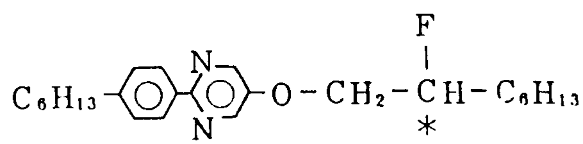 | 5 | 5 | 5 | - | - |
| | (S) 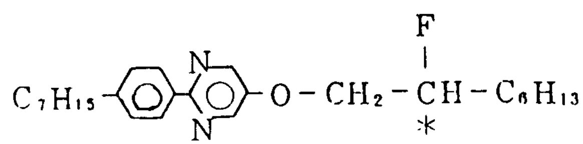 | 5 | - | - | - | 5 |
| | (S) 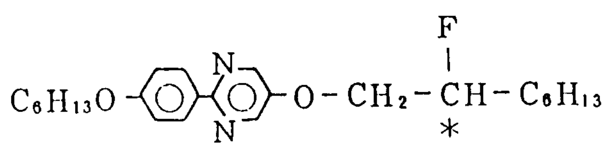 | 12 | - | - | - | 5 |
| | (S) 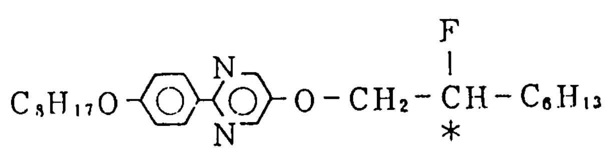 | - | 10 | 10 | 16 | 6 |

Table 8 (cont'n)

| Component | Compound | Example 8 | 9 | 10 | 11 | 12 |
|---|---|---|---|---|---|---|
| (B) | 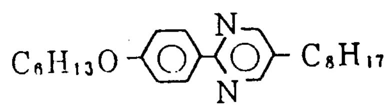 | 21 | 24 | 39 | 24 | 39 |
| | 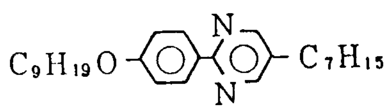 | 6 | 7 | 10 | 7 | 10 |
| | 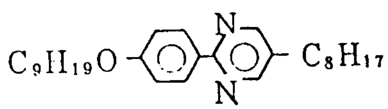 | 12 | 14 | 19 | 14 | 20 |
| | 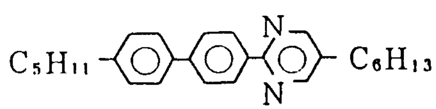 | 12 | 14 | - | 14 | - |
| | 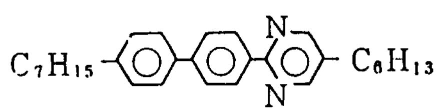 | 9 | 9 | - | 10 | - |

Table 8 (cont'n)

| Component | Compound | Example 8 | 9 | 10 | 11 | 12 |
|---|---|---|---|---|---|---|
| (C) | 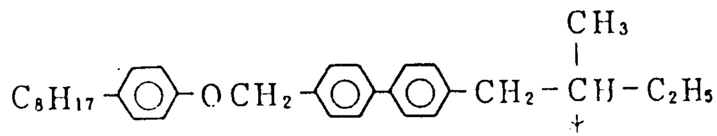 | 5 | - | 3 | 3 | - |
| | 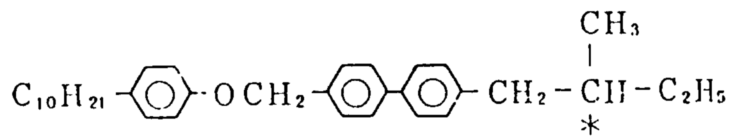 | - | 3 | - | - | 3 |
| Other | (S) 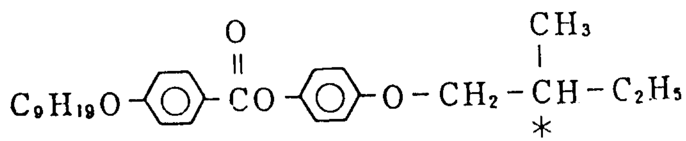 | - | 4 | 4 | 4 | 4 |
| | (S) 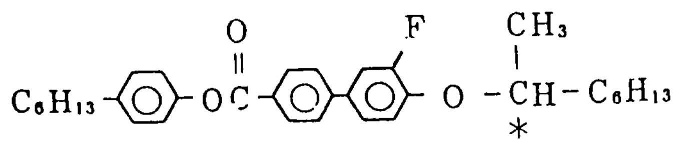 | 13 | 10 | 10 | 8 | 8 |

Table 9

| Phase Transition Temperature (°C) | | Example | | | | |
|---|---|---|---|---|---|---|
| | | 8 | 9 | 10 | 11 | 12 |
| Cr | SC* | -9 | -12 | -6 | -5 | -7 |
| SC* | SA | 67 | 66 | 52 | 69 | 55 |
| SA | N* | 76 | 74 | 64 | 74 | 63 |
| N* | ISO | 84 | 87 | 68 | 87 | 69 |
| Spontaneous Polarization 1) ($nC/cm^2$) | | 18 | 16 | 15 | 20 | 19 |
| Tilt Angle 1) (°) | | 28 | 27 | 23 | 28 | 25 |
| Helical Pitch (μm) | | | | | | |
| Pitch in SN* Phase 1) | | 7 | 5 | 6 | 5 | 7 |
| Pitch in N* Phase 2) | | 40 | 42 | 26 | 50 | 34 |
| Response Time 1) (μsec) | | 76 | 72 | 65 | 82 | 60 |

1) Measured at 25°C.
2) Measured in the neighborhood of SA-N* phase transition temperature.

## Claims

**1.** A ferroelectric liquid crystal composition comprising three components (A), (B), and (C) as main components, the proportions of said components (A), (B), and (C) being 5 to 25% by weight, 60 to 90% by weight, and 2 to 15% by weight, respectively, based on the total weight of the components (A), (B), and (C), wherein:

the component (A) is at least one compound selected from the compounds represented by the general formula (A):

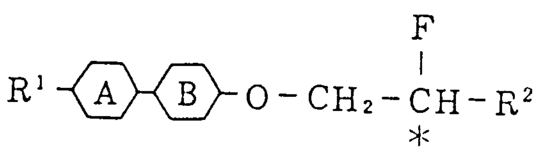 (A)

wherein $R^1$ and $R^2$ may be the same or different and are independently a linear or branched alkyl group having 1 to 18 carbon atoms, or a linear or branched alkoxy group having 1 to 18 carbon atoms,

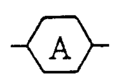 is

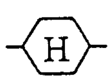 , 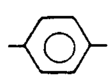 , 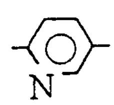 , 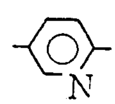 ,

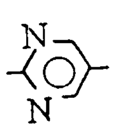 , 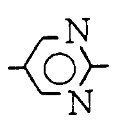 , 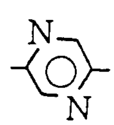 , 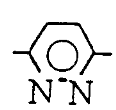 ,

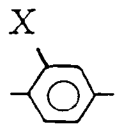 , or 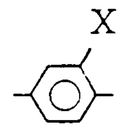 ,

wherein X is a cyano group, or a halogen atom,

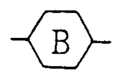 is 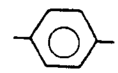 ,

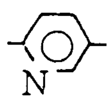 , 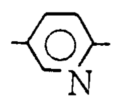 , 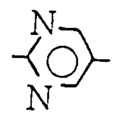 , 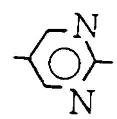 ,

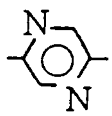 , 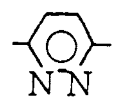 , 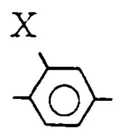 , or 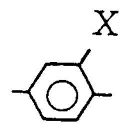 ,

wherein X is the same as defined above, and the symbol * indicates an asymmetric carbon atom;

the component (B) is at least one compound selected from the compounds having a smectic C phase and represented by the general formula (B):

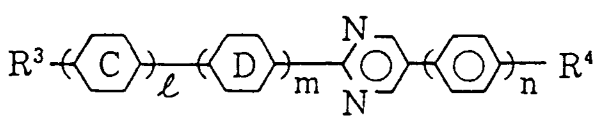 (B)

wherein $R^3$ and $R^4$ may be the same or different and are independently a linear or branched alkyl group having 1 to 18 carbon atoms, a linear or branched alkoxy group having 1 to 18 carbon atoms, or a linear or branched alkanoyloxy group having 1 to 18 carbon atoms,

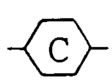 and 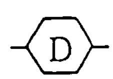

are independently

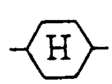 or 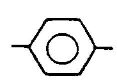 ,

and $\ell$, m and n are 0 or 1; and

the component (C) is at least one compound selected from the group consisting of:
the compounds represented by the general formula (C-a):

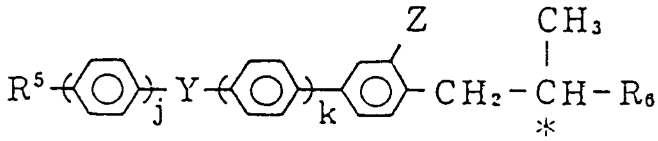 (C-a)

wherein $R^5$ is a linear or branched alkyl group having 1 to 18 carbon atoms, or a linear or branched alkoxy group having 1 to 18 carbon atoms, $R^6$ is a linear or branched alkyl group having 2 to 18 carbon atoms, or a linear or branched alkoxy group having 1 to 18 carbon atoms,
Y is

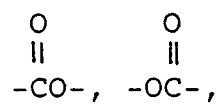

$-CH_2O-$, or $-OCH_2-$, Z is a cyano group, a halogen atom, or a hydrogen atom, j is 0, 1 or 2 and k is 0 or 1, and the symbol * is the same as defined above, and the compounds represented by the general formula (C-b):

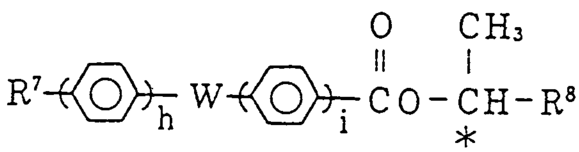 (C-b)

wherein $R^7$ is a linear or branched alkyl group having 1 to 18 carbon atoms, or a linear or branched alkoxy group having 1 to 18 carbon atoms, $R^8$ is a linear or branched alkyl group having 2 to 18 carbon atoms, or a linear or branched alkoxy group having 1 to 18 carbon atoms, W is

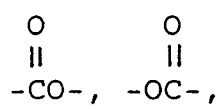

$-CH_2O-$, or $-OCH_2-$, h and i are 0, 1 or 2, and the symbol * is the same as defined above.

**2.** A ferroelectric liquid crystal composition as claimed in Claim 1, wherein the component (A) is at least one compound selected from the group consisting of:
the compounds represented by the general formula (A-I):

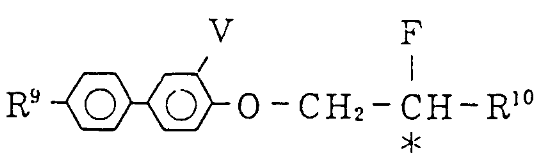 (A-I)

wherein $R^9$ and $R^{10}$ may be the same or different and independently a linear or branched alkyl group having 1 to 18 carbon atoms, or a linear or branched alkoxy group having 1 to 18 carbon atoms, V is -H, -CN, -F, or -Cl, and the symbol * indicates an asymmetric carbon atom;
the compounds represented by the general formula (A-II):

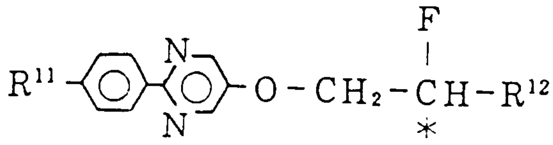

(A-II)

wherein $R^{11}$ and $R^{12}$ may be the same or different and are independently a linear or branched alkyl group having 1 to 18 carbon atoms, or a linear or branched alkoxy group having 1 to 18 carbon atoms, and the symbol * is the same as defined above;

the compounds represented by the general formula (A-III):

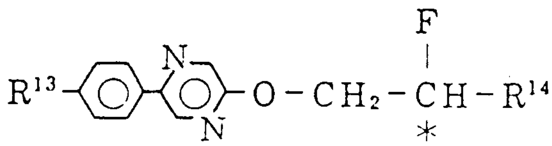

(A-III)

wherein $R^{13}$ and $R^{14}$ may be the same or different and are independently a linear or branched alkyl group having 1 to 18 carbon atoms, or a linear or branched alkoxy group having 1 to 18 carbon atoms, and the symbol * is the same as defined above;

the compounds represented by the general formula (A-IV):

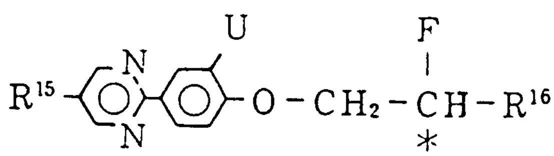

(A-IV)

wherein $R^{15}$ and $R^{16}$ may be the same or different and are independently a linear or branched alkyl group having 1 to 18 carbon atoms, or a linear or branched alkoxy group having 1 to 18 carbon atoms, U is -H, -CN, -F, or -Cl, and the symbol * is the same as defined above; and

the compounds represented by the general formula (A-V):

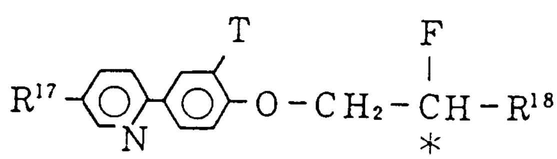

(A-V)

wherein $R^{17}$ and $R^{18}$ may be the same or different and are independently a linear or branched alkyl group having 1 to 18 carbon atoms, or a linear or branched alkoxy group having 1 to 18 carbon atoms, T is -H, -CN, -F, or -Cl, and the symbol * is the same as defined above.

**3.** A ferroelectric liquid crystal composition as claimed in Claim 1, wherein the component (B) is at least one compound selected from the group consisting of:

the compunds having a smectic C phase and represented by the general formula (B-VI):

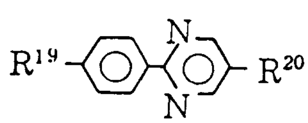

(B-VI)

wherein $R^{19}$ and $R^{20}$ may be the same or different and are independently a linear or branched alkyl

group having 1 to 18 carbon atoms, a linear or branched alkoxy group having 1 to 18 carbon atoms, or a linear or branched alkanoyloxy group having 1 to 18 carbon atoms; and

the compounds having a smectic C phase and represented by the general formula (B-VII):

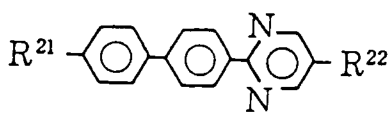

(B-VII)

wherein $R^{21}$ and $R^{22}$ may be the same or different and are independently a linear or branched alkyl group having 1 to 18 carbon atoms, or a linear or branched alkoxy group having 1 to 18 carbon atoms.

**4.** A ferroelectric liquid crystal composition as claimed in Claim 1, wherein the component (C) is at least one compound selected from the group consisting of:

the compounds represented by the general formula (C-a-VIII):

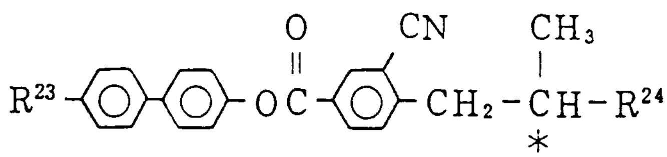

(C-a-VIII)

wherein $R^{23}$ is an alkyl group having 1 to 18 carbon atoms, or an alkoxy group having 1 to 18 carbon atoms, $R^{24}$ is an alkyl group having 2 to 18 carbon atoms, and the symbol * indicates an asymmetric carbon atom;

the compounds represented by the general formula (C-a-IX):

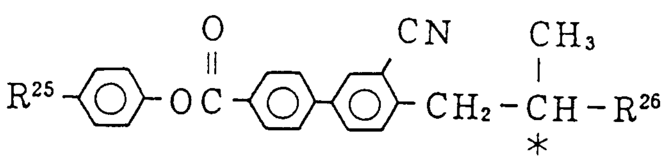

(C-a-IX)

wherein $R^{25}$ is an alkyl group having 1 to 18 carbon atoms, or an alkoxy group having 1 to 18 carbon atoms, $R^{26}$ is an alkyl group having 2 to 18 carbon atoms, and the symbol * is the same as defined above;

the compounds represented by the general formula (C-a-XII):

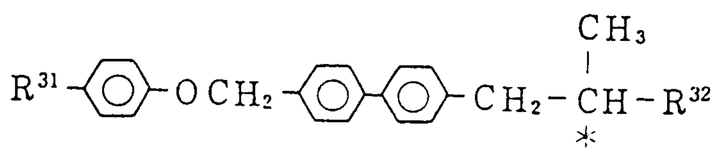

(C-a-XII)

wherein $R^{31}$ is an alkyl group having 1 to 18 carbon atoms, or an alkoxy group having 1 to 18 carbon atoms, $R^{32}$ is alkyl having 2 to 18 carbon atoms, and the symbol * is the same as defined above;

the compounds reprsented by the general formula (C-b-X):

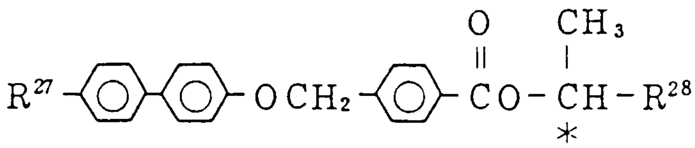

(C-b-X)

wherein $R^{27}$ is an alkyl group having 1 to 18 carbon atoms, or an alkoxy group having 1 to 18 carbon atoms, $R^{28}$ is an alkyl group having 2 to 18 carbon atoms, and the symbol * is the same as defined above; and

the compounds represented by the general formula (C-b-XI):

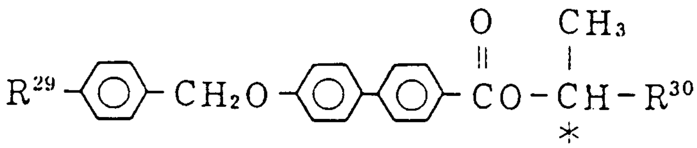

(C-b-XI)

wherein $R^{29}$ is an alkyl group having 1 to 18 carbon atoms, or an alkoxy group having 1 to 18 carbon atoms, $R^{30}$ is an alkyl group having 2 to 18 carbon atoms, and the symbol * is the same as defined above.

**5.** A ferroelectric liquid crystal composition as Claimed in Claim 1, wherein the component (A) is at least one compound selected from the group consisting of:

the compounds represented by the general formula (A-I'):

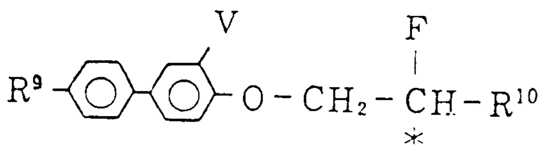

(A-I')

wherein $R^9$ is a linear alkyl group having 5 to 14 carbon atoms, or a linear alkoxy group having 5 to 14 carbon atoms, $R^{10}$ is a linear alkyl group having 4 to 11 carbon atoms, or a linear alkoxy group having 4 to 11 carbon atoms, V is -H, or -F, and the symbol * indicates an asymmetric carbon atom;

the compounds represented by the general formula (A-II'):

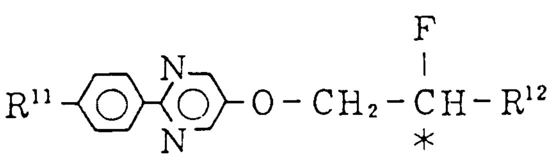

(A-II')

wherein $R^{11}$ is a linear alkyl group having 5 to 14 carbon atoms, or a linear alkoxy group having 5 to 14 carbon atoms, $R^{12}$ is a linear alkyl group having 4 to 11 carbon atoms, or a linear alkoxy group having 4 to 11 carbon atoms, and the symbol * is the same as defined;

the compounds represented by the general formula (A-III'):

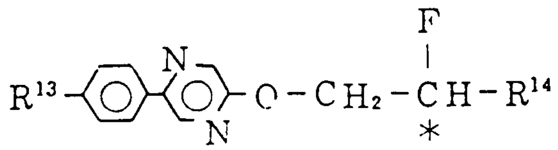 (A-III′)

wherein $R^{13}$ is a linear alkyl group having 5 to 14 carbon atoms, or a linear alkoxy group having 5 to 14 carbon atoms, $R^{14}$ is a linear alkyl group having 4 to 11 carbon atoms, or a linear alkoxy group having 4 to 11 carbon atoms, and the symbol * is the same as defined above;

the compounds represented by the general formula (A-IV′):

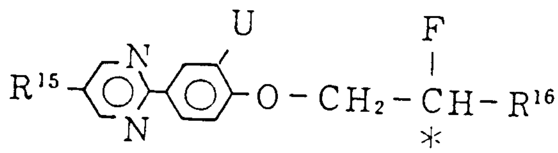 (A-IV′)

wherein $R^{15}$ is a linear alkyl group having 5 to 14 carbon atoms, or a linear alkoxy group having 5 to 14 carbon atoms, $R^{16}$ is a linear alkyl group having 4 to 11 carbon atoms, or a linear alkoxy group having 4 to 11 carbon atoms, U is -H, or -F, and the symbol * is the same as defined above; and

the compounds represented by the general formula (A-V′):

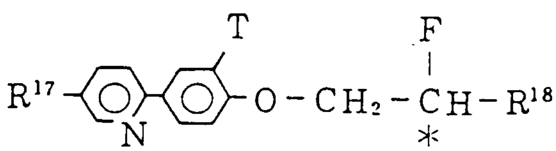 (A-V′)

wherein $R^{17}$ is a linear alkyl group having 5 to 14 carbon atoms, or a linear alkoxy group having 5 to 14 carbon atoms, $R^{18}$ is a linear alkyl group having 4 to 11 carbon atoms, or a linear alkoxy group having 4 to 11 carbon atoms, T is -H, or -F, and the symbol * is the same as defined above.

**6.** A ferroelectric liquid crystal composition as Claimed in Claim 1, wherein the component (A) is at lease one compound selected from the group consisting of:

the compounds represented by the general formula (A-I″):

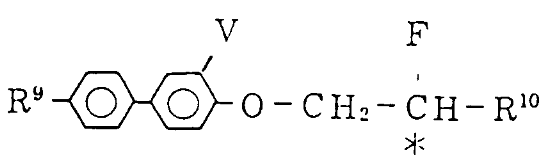 (A-I″)

wherein $R^9$ is a linear alkyl group having 5 to 14 carbon atoms, or a linear alcoxy group having 5 to 14 carbon atoms, $R^{10}$ is a linear alkyl group having 4 to 11 carbon atoms, V is -H, or -F, and the symbol * indicates an asymmetric carbon atoms;

the compounds represented by the general formula (A-II″):

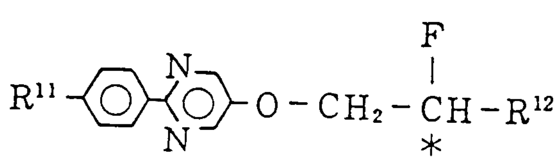 (A-II″)

wherein $R^{11}$ is a linear alkyl group having 5 to 14 carbon atoms, or a linear alkoxy group having 5 to 14 carbon atoms, $R^{12}$ is a linear alkyl group having 4 to 11 carbon atoms, and the symbol * is the same as defined above;

the compounds represented by the general formula (A-III″):

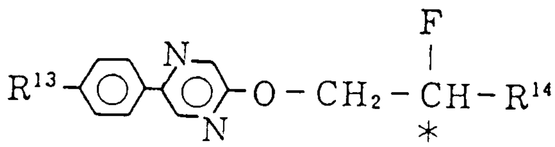

(A-III″)

wherein $R^{13}$ is a linear alkyl group having 5 to 14 carbon atoms, or a linear alkoxy group having 5 to 14 carbon atoms, $R^{14}$ is a linear alkyl group having 4 to 11 carbon atoms, and the symbol * is the same as defined above;

the compounds represented by the general formula (A-IV″):

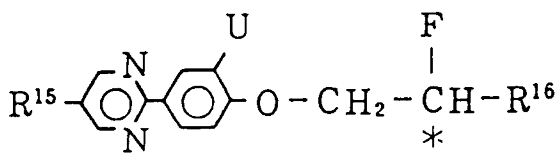

(A-IV″)

wherein $R^{15}$ is a linear alkyl group having 5 to 14 carbon atoms, or a linear alkoxy group having 5 to 14 carbon atoms, $R^{16}$ is a linear alkyl group having 4 to 11 carbon atoms, U is -H, or -F, and the symbol * is the same as defined above; and

the compounds represented by the general formula (A-V″):

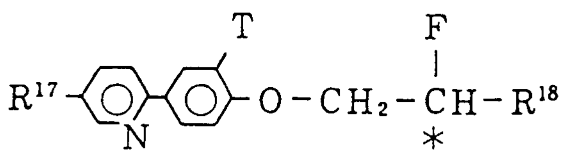

(A-V″)

wherein $R^{17}$ is a linear alkyl group having 5 to 14 carbon atoms, or a linear alkoxy group having 5 to 14 carbon atoms, $R^{18}$ is a linear alkyl group having 4 to 11 carbon atoms, T is -H, or -F, and the symbol * is the same as defined above.

**7.** A ferroelectric liquid crystal composition as Claimed in Claim 1, wherein the component (B) is at least one compound selected from the group consisting of:

the compounds having a smectic C phase and represented by the general formula (B-VI′):

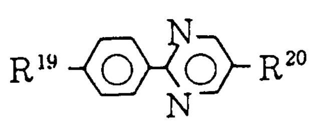

(B-VI′)

wherein $R^{19}$ is a linear alkyl group having 5 to 12 carbon atoms, a linear alkoxy group having 5 to 12 carbon atoms, or a linear alkanoyl group having 5 to 12 carbon atoms, $R^{20}$ is a linear alkyl group having 7 to 15 carbon atoms, or a linear alkoxy group having 7 to 15 carbon atoms; and

the compounds having a smectic C phase and represented by the general formula (B-VII′):

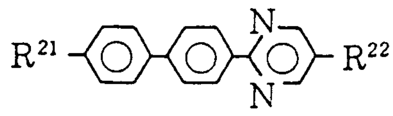

(B-VII')

wherein $R^{21}$ and $R^{22}$ are independently a linear alkyl group having 5 to 10 carbon atoms, or a linear alkoxy group having 5 to 10 carbon atoms.

**8.** A ferroelectric liquid crystal composition as claimed in Claim 1, wherein the component (B) is at least one compound selected from the group consisting of:

the compounds having a smectic C phase and represented by the general formula (B-VI″):

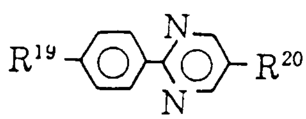

(B-VI″)

wherein $R^{19}$ is a linear alkyl group having 6 to 12 carbon atoms, or a linear alkoxy group having 6 to 12 carbon atoms, $R^{20}$ is a linear alkyl group having 7 to 15 carbon atoms, or a linear alkoxy group having 7 to 15 carbon atoms; and

the compounds having a smectic C phase and represented by the general formula (B-VII″):

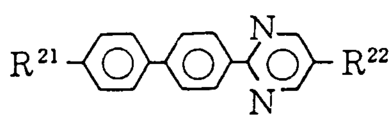

(B-VII″)

wherein $R^{21}$ is a linear alkyl group having 5 to 8 carbon atoms, or a linear alkoxy group having 5 to 8 carbon atoms, and $R^{22}$ is a linear alkyl group having 6 to 8 carbon atoms.

**9.** A ferroelectric liquid crystal composition as claimed in Claim 1, wherein the component (C) is at least one compound selected from the group consisting of:

the compounds represented by the general formula (C-a-VIII'):

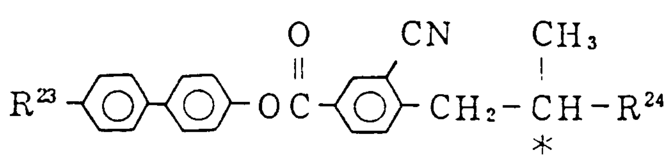

(C-a-VIII')

wherein $R^{23}$ is a linear alkyl group having 5 to 12 carbon atoms, or a linear alkoxy group having 5 to 12 carbon atoms, $R^{24}$ is a linear alkyl group having 2 to 8 carbon atoms, and the symbol * indicates an asymmetric carbon atom;

the compounds represented by the general formula (C-a-IX'):

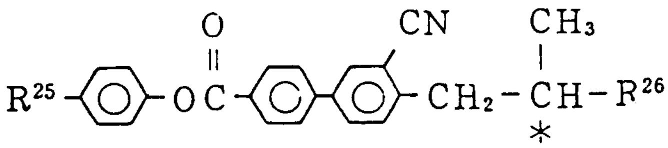

(C-a-IX')

wherein $R^{25}$ is a linear alkyl group having 5 to 12 carbon atoms, or a linear alkoxy group having 5 to 12 carbon atoms, $R^{26}$ is a linear alkyl group having 2 to 8 carbon atoms, and the symbol * is the same as defined above;

the compounds represented by the general formula (C-a-XII'):

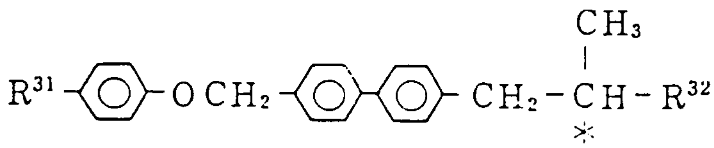

(C-a-XII')

wherein $R^{31}$ is a linear alkyl group having 5 to 12 carbon atoms, or a linear alkoxy group having 5 to 12 carbon atoms, $R^{32}$ is a linear alkyl group having 2 to 8 carbon atoms, and the symbol * is the same as defined above;

the compounds represented by the general formula (C-b-X'):

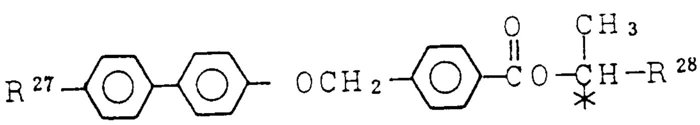

(C-b-X')

wherein $R^{27}$ is a linear alkyl group having 5 to 12 carbon atoms, or a linear alkoxy group having 5 to 12 carbon atoms, $R^{28}$ is a linear alkyl group having 2 to 10 carbon atoms, and the symbol * is the same as defined above; and

the compounds represented by the general formula (C-b-XI'):

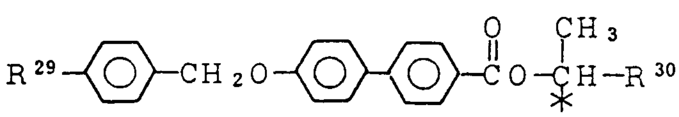

(C-b-XI')

wherein $R^{29}$ is a linear alkyl group having 5 to 12 carbon atoms, or a linear alkoxy group having 5 to 12 carbon atoms, $R^{30}$ is a linear alkyl group having 2 to 10 carbon atoms, and the symbol * is the same as defined above.

**10.** A ferroelectric liquid crystal composition as claimed in Claim 1, wherein the component (C) is at least one compound selected from the group consisting of:

the compounds represented by the general formula (C-a-VIII''):

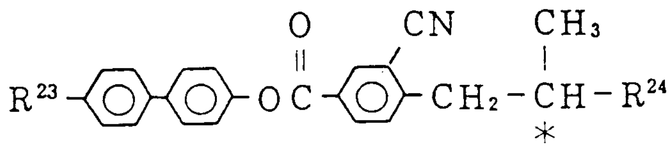

(C-a-VIII″)

wherein $R^{23}$ is a linear alkyl group having 8 to 10 carbon atoms, or a linear alkoxy group having 8 to 10 carbon atoms, $R^{24}$ is a linear alkyl group having 2 to 6 carbon atoms, and the symbol * indicates an asymmetric carbon atom;

the compounds represented by the general formula (C-a-IX″):

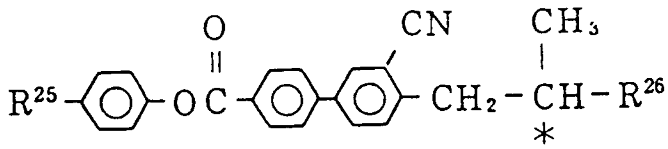

(C-a-IX″)

wherein $R^{25}$ is a linear alkyl group having 8 to 10 carbon atoms, or a linear alkoxy group having 8 to 10 carbon atoms, $R^{26}$ is a linear alkyl group having 2 to 6 carbon atoms, and the symbol * is the same as defined above;

the compounds represented by the general formula (C-a-XII″):

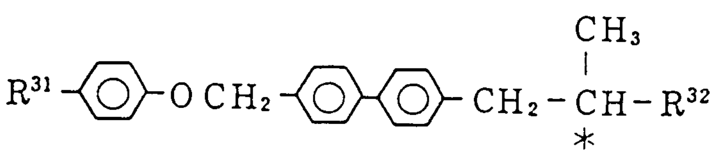

(C-a-XII″)

wherein $R^{31}$ is a linear alkyl group having 8 to 10 carbon atoms, or a linear alkoxy group having 8 to 10 carbon atoms, $R^{32}$ is a linear alkyl group having 2 to 6 carbon atoms, and the symbol * is the same as defined above;

the compounds reprsented by the general formula (C-b-X″):

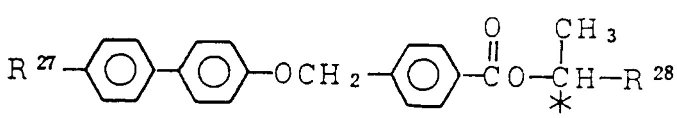

(C-b-X″)

wherein $R^{27}$ is a linear alkyl group having 5 to 12 carbon atoms, or a linear alkoxy group having 5 to 12 carbon atoms, $R^{28}$ is a linear alkyl group having 2 to 6 carbon atoms, and the symbol * is the same as defined above; and

the compounds reprsented by the general formula (C-b-XI″):

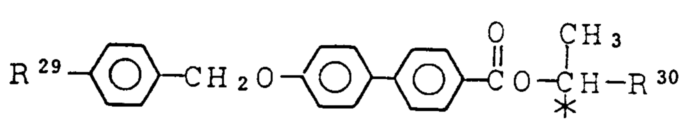

(C-b-XI″)

wherein $R^{29}$ is a linear alkyl group having 5 to 12 carbon atoms, or a linear alkoxy group having 5 to 12 carbon atoms, $R^{30}$ is a linear alkyl group having 2 to 6 carbon atoms, and the symbol * is the same as defined above.

11. A light switching device using the ferroelectric liquid crystal composition as claimed in Claim 1.

**Patentansprüche**

1. Eine ferroelektrische Flüssigkristallzusammensetzung, welche drei Bestandteile (A), (B) und (C) als Hauptbestandteile enthalt, wobei die Anteile der genannten Bestandteile (A), (B) und (C) jeweils bezogen auf das Gesamtgewicht der Bestandteile (A), (B) und (C) bei 5 bis 25 Gew.-%, 60 bis 90 Gew.-% bzw. 2 bis 15 Gew.-% liegen, wobei:
der Bestandteil (A) mindestens eine Verbindung ist, welche ausgewählt ist aus den Verbindungen, die durch die allgemeine Formel (A):

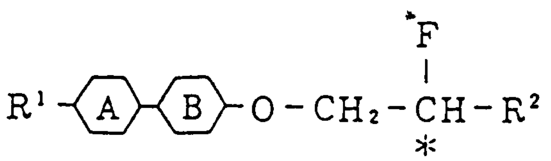 (A)

dargestellt werden, worin $R^1$ und $R^2$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sind,

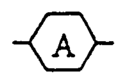

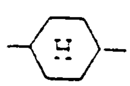 , 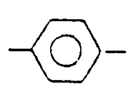 , 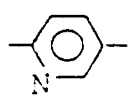 , 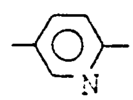 , 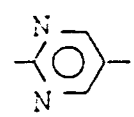 ,

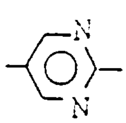 , 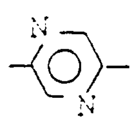 , 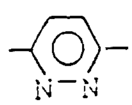 , 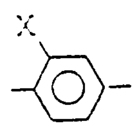 oder 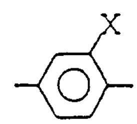

ist, worin X eine Cyangruppe oder ein Halogenatom ist,

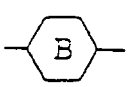 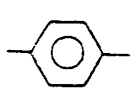 , 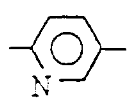 , 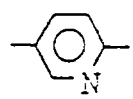 , 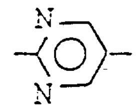 ,

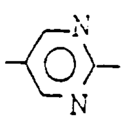 , 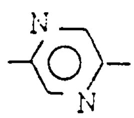 , 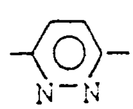 , 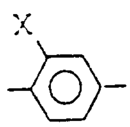 oder 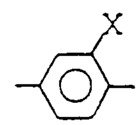

ist, worin X in derselben Weise wie oben definiert ist und das Symbol * ein asymmetrisches Kohlenstoffatom bezeichnet;
der Bestandteil (B) mindestens eine Verbindung ist, welche aus den Verbindungen ausgewählt ist, die eine smektische C-Phase haben und durch die allgemeine Formel (B):

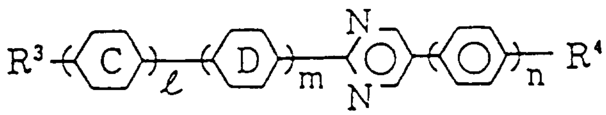 (B)

dargestellt werden, worin $R^3$ und $R^4$ gleich oder unterschiedlich sein können und unabhängig voneinander eine lineare oder verzweigte Alkylgruppe mit 1 bis 18 Kohlenstoffatomen, eine lineare oder verzweigte Alkoxygruppe mit 1 bis 18 Kohlenstoffatomen oder eine lineare oder verzweigte Alkanoyloxygruppe mit 1 bis 18 Kohlenstoffatomen
sind,

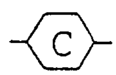 und 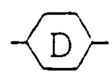

unabhängig voneinander sind, und l, m und n

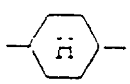 oder 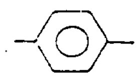

0 oder 1 sind; und
der Bestandteil (C) mindestens eine Verbindung ist, welche ausgewählt ist aus der Gruppe, welche aus Verbindungen besteht, die durch die allgemeine Formel (C-a) :

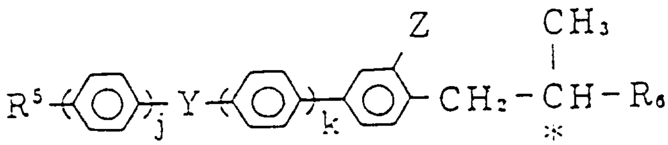 (C-a)

dargestellt werden, worin $R^5$ eine lineare oder verzweigte Alkylgruppe mit 1 bis 18 Kohlenstoffatomen oder eine lineare oder verzweigte Alkoxygruppe mit 1 bis 18 Kohlenstoffatomen ist, $R^6$ eine lineare oder verzweigte Alkylgruppe mit 2 bis 18 Kohlenstoffatomen oder eine lineare oder verzweigte Alkoxygruppe mit 1 bis 18 Kohlenstoffatomen ist, Y

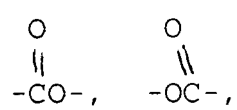

$-CH_2O-$, oder $-OCH_2-$ ist, Z eine Cyangruppe, ein Halogenatom oder ein Wasserstoffatom ist, j 0, 1 oder 2 ist und k 0 oder 1 ist, und das Symbol * in derselben Weise wie oben definiert ist, und aus Verbindungen, welche durch die allgemeine Formel (C-b):

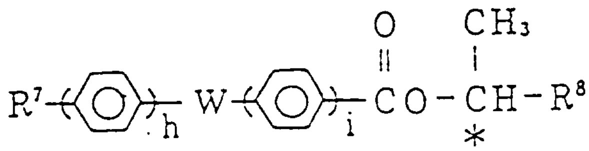 (C-b)

dargestellt werden, worin $R^7$ eine lineare oder verzweigte Alkylgruppe mit 1 bis 18 Kohlenstoffatomen oder eine lineare oder verzweigte Alkoxygruppe mit 1 bis 18 Kohlenstoffatomen ist, $R^8$ eine lineare oder verzweigte Alkylgruppe mit 2 bis 18 Kohlenstoffatomen oder eine lineare oder verzweigte Alkoxygruppe mit 1 bis 18 Kohlenstoffatomen ist, W

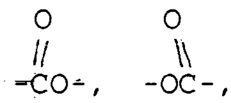

$-CH_2O-$, oder $-OCH_2-$ ist, h und i 0, 1 oder 2 sind, und das Symbol * in derselben Weise wie oben definiert ist.

**2.** Eine ferroelektrische Flüssigkristallzusammensetzung wie in Anspruch 1 beansprucht, worin der Bestandteil (A) mindestens eine Verbindung ist, welche ausgewählt ist aus der Gruppe bestehend aus: den Verbindungen, welche dargestellt werden durch die allgemeine Formel (A-I):

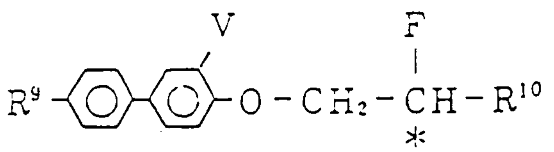 (A-I),

worin $R^9$ und $R^{10}$ gleich oder unterschiedlich und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sein können, V -H, -CN, -F oder -Cl ist und das Symbol * ein asymmetrisches Kohlenstoffatom bezeichnet;
den Verbindungen, welche dargestellt werden durch die allgemeine Formel (A-II):

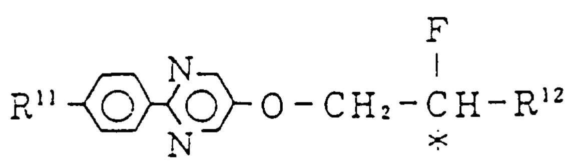 (A-II),

worin $R^{11}$ und $R^{12}$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sind, und das Symbol * in derselben Weise wie oben definiert ist;
den Verbindungen, welche dargestellt werden durch die allgemeine Formel (A-III):

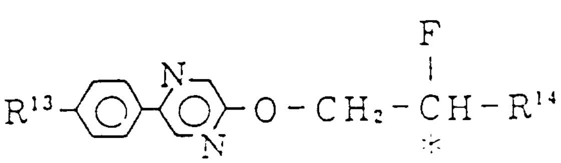 (A-III),

worin $R^{13}$ und $R^{14}$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sind, und das Symbol * in derselben Weise wie oben definiert ist;
den Verbindungen, welche dargestellt werden durch die allgemeine Formel (A-IV):

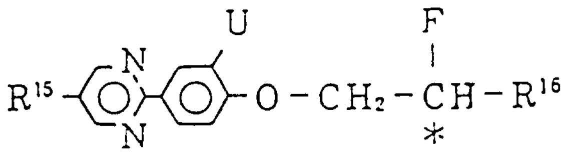

(A-IV),

worin $R^{15}$ und $R^{16}$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sind, U -H, -CN, -F oder -Cl ist, und das Symbol * in derselben Weise wie oben definiert ist;
den Verbindungen, welche dargestellt werden durch die allgemeine Formel (A-V):

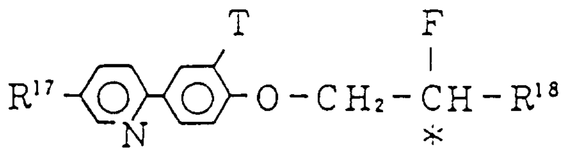

(A-V),

worin $R^{17}$ und $R^{18}$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen sind, T -H, -CN, -F oder -Cl ist, und das Symbol * in derselben Weise wie oben definiert ist.

**3.** Eine ferroelektrische Flüssigkristallzusammensetzung wie in Anspruch 1 beansprucht, worin der Bestandteil (B) mindestens eine Verbindung ist, welche ausgewählt ist aus der Gruppe bestehend aus:
den Verbindungen, welche eine smektische C-Phase haben und dargestellt werden durch die allgemeine Formel (B-VI):

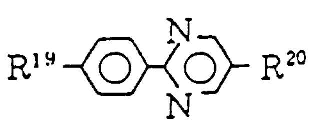

(B-VI),

worin $R^{19}$ und $R^{20}$ gleich oder unterschiedlich sein können und unabhängig voneinander eine lineare oder verzweigte Alkylgruppe mit 1 bis 18 Kohlenstoffatomen oder eine lineare oder verzweigte Alkoxygruppe mit 1 bis 18 Kohlenstoffatomen oder eine lineare oder verzweigte Alkanoyloxygruppe mit 1 bis 18 Kohlenstoffatomen sind; und
den Verbindungen, welche eine smektische C-Phase haben und dargestellt werden durch die allgemeine Formel (B-VII):

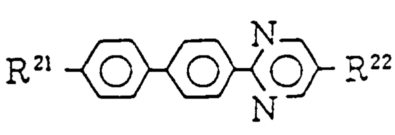

(B-VII),

worin $R^{21}$ und $R^{22}$ gleich oder unterschiedlich sein können und unabhängig voneinander eine lineare

oder verzweigte Alkylgruppe mit 1 bis 18 Kohlenstoffatomen oder eine lineare oder verzweigte Alkoxygruppe mit 1 bis 18 Kohlenstoffatomen sind.

**4.** Eine ferroelektrische Flüssigkristallzusammensetzung wie in Anspruch 1 beansprucht, worin der Bestandteil (C) mindestens eine Verbindung ist, welche ausgewählt ist aus der Gruppe bestehend aus: den Verbindungen, welche dargestellt werden durch die allgemeine Formel (C-a-VIII):

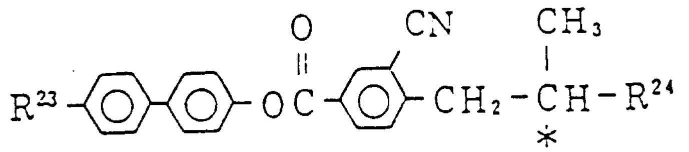

(C-a-VIII),

worin $R^{23}$ eine Alkylgruppe mit 1 bis 18 Kohlenstoffatomen oder eine Alkoxygruppe mit 1 bis 18 Kohlenstoffatomen ist, $R^{24}$ eine Alkylgruppe mit 2 bis 18 Kohlenstoffatomen ist und das Symbol * ein asymmetrisches Kohlenstoffatom bezeichnet;
den Verbindungen, welche dargestellt werden durch die allgemeine Formel (C-a-IX):

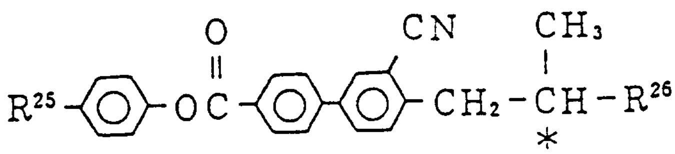

(C-a-IX),

worin $R^{25}$ eine Alkylgruppe mit 1 bis 18 Kohlenstoffatomen oder eine Alkoxygruppe mit 1 bis 18 Kohlenstoffatomen ist, $R^{26}$ eine Alkylgruppe mit 2 bis 18 Kohlenstoffatomen ist, und das Symbol * in derselben Weise wie oben definiert ist;
den Verbindungen, welche dargestellt werden durch die allgemeine Formel (C-a-XII):

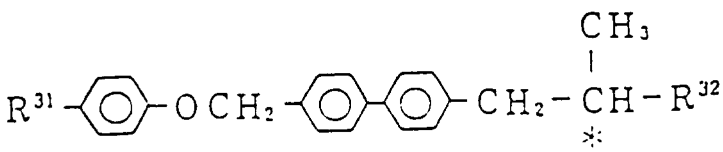

(C-a-XII),

worin $R^{31}$ eine Alkylgruppe mit 1 bis 18 Kohlenstoffatomen oder eine Alkoxygruppe mit 1 bis 18 Kohlenstoffatomen ist, $R^{32}$ eine Alkylgruppe mit 2 bis 18 Kohlenstoffatomen ist, und das Symbol * in derselben Weise wie oben definiert ist;
den Verbindungen, welche dargestellt werden durch die allgemeine Formel (C-b-X):

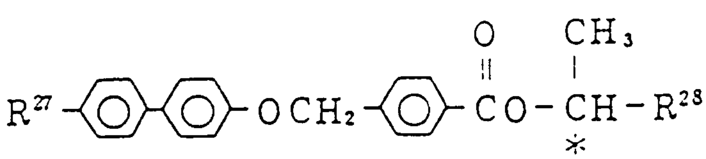

(C-b-X),

worin $R^{27}$ eine Alkylgruppe mit 1 bis 18 Kohlenstoffatomen oder eine Alkoxygruppe mit 1 bis 18 Kohlenstoffatomen ist, $R^{28}$ eine Alkylgruppe mit 2 bis 18 Kohlenstoffatomen ist, und das Symbol * in derselben Weise wie oben definiert ist;

den Verbindungen, welche dargestellt werden durch die allgemeine Formel (C-b-XI):

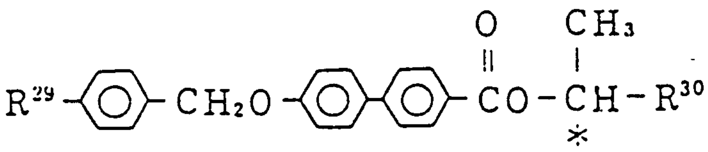

(C-b-XI),

worin $R^{29}$ eine Alkylgruppe mit 1 bis 18 Kohlenstoffatomen oder eine Alkoxygruppe mit 1 bis 18 Kohlenstoffatomen ist, $R^{30}$ eine Alkylgruppe mit 2 bis 18 Kohlenstoffatomen ist und das Symbol * in derselben Weise wie oben definiert ist.

**5.** Eine ferroelektrische Flüssigkristallzusammensetzung wie in Anspruch 1 beansprucht, worin der Bestandteil (A) mindestens eine Verbindung ist, welche ausgewählt ist aus der Gruppe bestehend aus:
den Verbindungen, welche dargestellt werden durch die allgemeine Formel (A-I'):

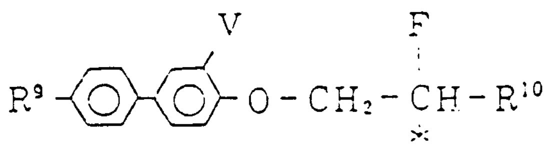

(A-I'),

worin $R^9$ eine lineare Alkylgruppe mit 5 bis 14 Kohlenstoffatomen oder eine lineare Alkoxygruppe mit 5 bis 14 Kohlenstoffatomen ist, $R^{10}$ eine lineare Alkylgruppe mit 4 bis 11 Kohlenstoffatomen oder eine lineare Alkoxygruppe mit 4 bis 11 Kohlenstoffatomen ist, V -H oder -F ist, und das Symbol * ein asymmetrisches Kohlenstoffatom bezeichnet;
den Verbindungen, welche dargestellt werden durch dies allgemeine Formel (A-II'):

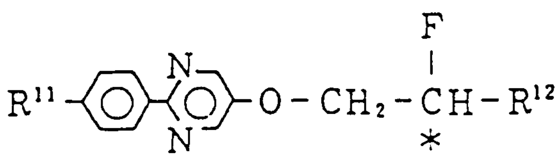

(A-II'),

worin $R^{11}$ eine lineare Alkylgruppe mit 5 bis 14 Kohlenstoffatomen oder eine lineare Alkoxygruppe mit 5 bis 14 Kohlenstoffatomen ist, $R^{12}$ eine lineare Alkylgruppe mit 4 bis 11 Kohlenstoffatomen oder eine lineare Alkoxygruppe mit 4 bis 11 Kohlenstoffatomen ist, und das Symbol * in derselben Weise wie oben definiert ist;
den Verbindungen, welche dargestellt werden durch die allgemeine Formel (A-III'):

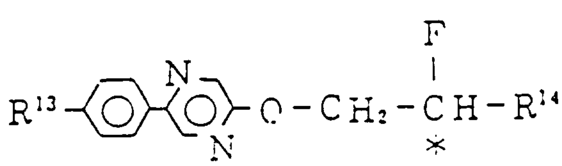

(A-III'),

worin $R^{13}$ eine lineare Alkylgruppe mit 5 bis 14 Kohlenstoffatomen oder eine lineare Alkoxygruppe mit 5 bis 14 Kohlenstoffatomen ist, $R^{14}$ eine lineare Alkylgruppe mit 4 bis 11 Kohlenstoffatomen oder eine lineare Alkoxygruppe mit 4 bis 11 Kohlenstoffatomen ist, und das Symbol * in derselben Weise wie oben definiert ist;
den Verbindungen, welche dargestellt werden durch die allgemeine Formel (A-IV'):

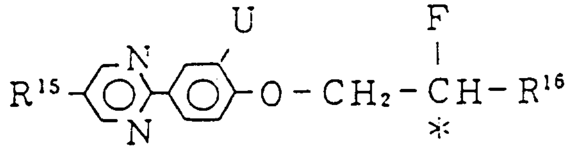 (A-IV'),

worin $R^{15}$ eine lineare Alkylgruppe mit 5 bis 14 Kohlenstoffatomen oder eine lineare Alkoxygruppe mit 5 bis 14 Kohlenstoffatomen ist, $R^{16}$ eine lineare Alkylgruppe mit 4 bis 11 Kohlenstoffatomen oder eine lineare Alkoxygruppe mit 4 bis 11 Kohlenstoffatomen ist, U -H oder -F ist, und das Symbol * in derselben Weise wie oben definiert ist; und
den Verbindungen, welche dargestellt werden durch die allgemeine Formel (A-V'):

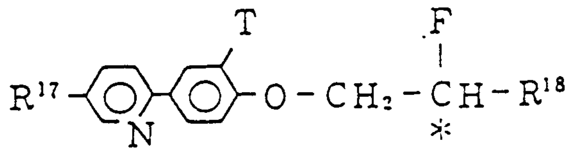 (A-V'),

worin $R^{17}$ eine lineare Alkylgruppe mit 5 bis 14 Kohlenstoffatomen oder eine lineare Alkoxygruppe mit 5 bis 14 Kohlenstoffatomen ist, $R^{18}$ eine lineare Alkylgruppe mit 4 bis 11 Kohlenstoffatomen oder eine lineare Alkoxygruppe mit 4 bis 11 Kohlenstoffatomen ist, T -H oder -F ist, und das Symbol * in derselben Weise wie oben definiert ist.

**6.** Eine ferroelektrische Flüssigkristallzusammensetzung wie in Anspruch 1 beansprucht, worin der Bestandteil (A) mindestens eine Verbindung ist, welche ausgewählt ist aus der Gruppe bestehend aus:
den Verbindungen, welche dargestellt werden durch die allgemeine Formel (A-I''):

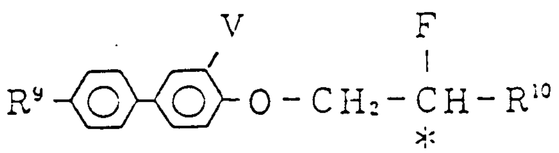 (A-I''),

worin $R^9$ eine lineare Alkylgruppe mit 5 bis 14 Kohlenstoffatomen oder eine lineare Alkoxygruppe mit 5 bis 14 Kohlenstoffatomen ist, $R^{10}$ eine lineare Alkylgruppe mit 4 bis 11 Kohlenstoffatomen ist, V -H oder -F ist, und das Symbol * ein asymmetrisches Kohlenstoffatom bezeichnet;
den Verbindungen, welche dargestellt werden durch die allgemeine Formel (A-II''):

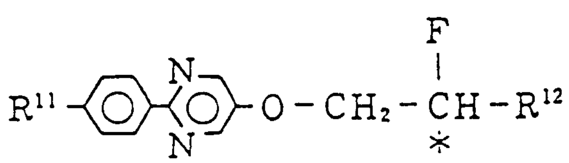 (A-II''),

worin $R^{11}$ eine lineare Alkylgruppe mit 5 bis 14 Kohlenstoffatomen oder eine lineare Alkoxygruppe mit 5 bis 14 Kohlenstoffatomen ist, $R^{12}$ eine lineare Alkylgruppe mit 4 bis 11 Kohlenstoffatomen ist, und das Symbol * in derselben Weise wie oben definiert ist;
den Verbindungen, welche dargestellt werden durch die allgemeine Formel (A-III''):

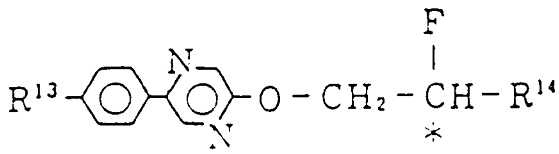

(A-III''),

worin $R^{13}$ eine lineare Alkylgruppe mit 5 bis 14 Kohlenstoffatomen oder eine lineare Alkoxygruppe mit 5 bis 14 Kohlenstoffatomen ist, $R^{14}$ eine lineare Alkylgruppe mit 4 bis 11 Kohlenstoffatomen ist, und das Symbol * in derselben Weise wie oben definiert ist;
den Verbindungen, welche dargestellt werden durch die allgemeine Formel (A-IV''):

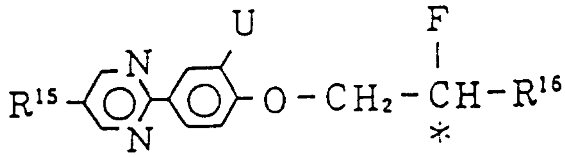

(A-IV''),

worin $R^{15}$ eine lineare Alkylgruppe mit 5 bis 14 Kohlenstoffatomen oder eine lineare Alkoxygruppe mit 5 bis 14 Kohlenstoffatomen ist, $R^{16}$ eine lineare Alkylgruppe mit 4 bis 11 Kohlenstoffatomen ist, U -H oder -F ist, und das Symbol * in derselben Weise wie oben definiert ist; und
den Verbindungen, welche dargestellt werden durch die allgemeine Formel (A-V''):

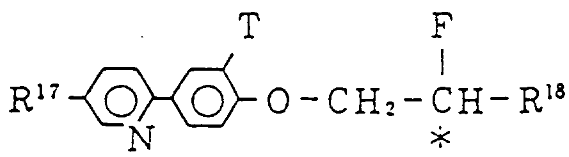

(A-V''),

worin $R^{17}$ eine lineare Alkylgruppe mit 5 bis 14 Kohlenstoffatomen oder eine lineare Alkoxygruppe mit 5 bis 14 Kohlenstoffatomen ist, $R^{18}$ eine lineare Alkylgruppe mit 4 bis 11 Kohlenstoffatomen ist, T -H oder -F ist, und das Symbol * in derselben Weise wie oben definiert ist.

**7.** Eine ferroelektrische Flüssigkristallzusammensetzung wie in Anspruch 1 beansprucht, worin der Bestandteil (B) mindestens eine Verbindung ist, welche ausgewählt ist aus der Gruppe bestehend aus:
den Verbindungen, welche eine smektische C-Phase haben und dargestellt werden durch die allgemeine Formel (B-VI'):

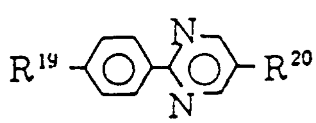

(B-VI'),

worin $R^{19}$ eine lineare Alkylgruppe mit 5 bis 12 Kohlenstoffatomen, eine lineare Alkoxygruppe mit 5 bis 12 Kohlenstoffatomen oder eine lineare Alkanoyloxygruppe mit 5 bis 12 Kohlenstoffatomen ist, $R^{20}$ eine lineare Alkylgruppe mit 7 bis 15 Kohlenstoffatomen oder eine lineare Alkoxygruppe mit 7 bis 15 Kohlenstoffatomen ist; und
den Verbindungen, welche eine smektische C-Phase haben und dargestellt werden durch die allgemeine Formel (B-VII'):

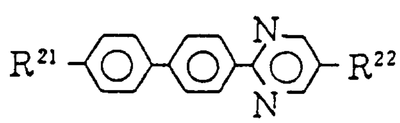

(B-VII'),

worin $R^{21}$ und $R^{22}$ unabhängig voneinander eine lineare Alkylgruppe mit 5 bis 10 Kohlenstoffatomen oder eine lineare Alkoxygruppe mit 5 bis 10 Kohlenstoffatomen sind.

**8.** Eine ferroelektrische Flüssigkristallzusammensetzung wie in Anspruch 1 beansprucht, worin der Bestandteil (B) mindestens eine Verbindung ist, welche ausgewählt ist aus der Gruppe bestehend aus:
den Verbindungen, welche eine smektische C-Phase, und welche dargestellt werden durch die allgemeine Formel (B-VI''):

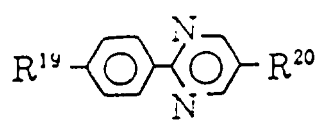

(B-VI″),

worin $R^{19}$ eine lineare Alkylgruppe mit 6 bis 12 Kohlenstoffatomen oder eine lineare Alkoxygruppe mit 6 bis 12 Kohlenstoffatomen ist,und $R^{20}$ eine lineare Alkylgruppe mit 7 bis 15 Kohlenstoffatomen oder eine lineare Alkoxygruppe mit 7 bis 15 Kohlenstoffatomen ist; und
den Verbindungen, welche eine smektische C-Phase haben und dargestellt werden durch die allgemeine Formel (B-VII''):

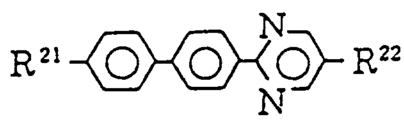

(B-VII″),

worin $R^{21}$ eine lineare Alkylgruppe mit 5 bis 8 Kohlenstoffatomen oder eine lineare Alkoxygruppe mit 5 bis 8 Kohlenstoffatomen ist, und $R^{22}$ eine lineare Alkylgruppe mit 6 bis 8 Kohlenstoffatomen ist.

**9.** Eine ferroelektrische Flüssigkristallzusammensetzung wie in Anspruch 1 beansprucht, worin der Bestandteil (C) mindestens eine Verbindung ist, welche ausgewählt ist aus der Gruppe bestehend aus:
den Verbindungen, welche dargestellt werden durch die allgemeine Formel (C-a-VIII'):

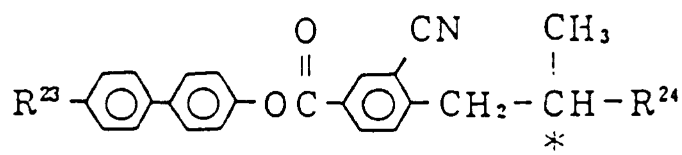

(C-a-VIII′),

worin $R^{23}$ eine lineare Alkylgruppe mit 5 bis 12 Kohlenstoffatomen oder eine lineare Alkoxygruppe mit 5 bis 12 Kohlenstoffatomen ist, $R^{24}$ eine lineare Alkylgruppe mit 2 bis 8 Kohlenstoffatomen ist und das Symbol * ein asymmetrisches Kohlenstoffatom bezeichnet;
den Verbindungen, welche dargestellt werden durch die allgemeine Formel (C-a-IX'):

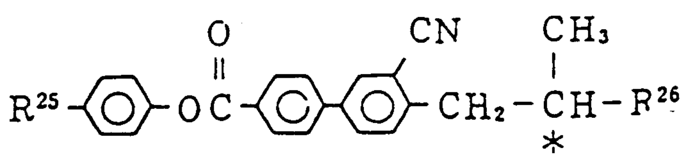

(C-a-IX′),

worin $R^{25}$ eine lineare Alkylgruppe mit 5 bis 12 Kohlenstoffatomen oder eine lineare Alkoxygruppe mit 5 bis 12 Kohlenstoffatomen ist, $R^{26}$ eine lineare Alkylgruppe mit 2 bis 8 Kohlenstoffatomen ist, und das

Symbol * in derselben Weise wie oben definiert ist;
den Verbindungen, welche dargestellt werden durch die allgemeine Formel (C-a-XII'):

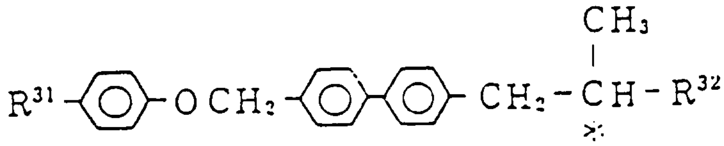

(C-a-XII'),

worin $R^{31}$ eine lineare Alkylgruppe mit 5 bis 12 Kohlenstoffatomen oder eine lineare Alkoxygruppe mit 5 bis 12 Kohlenstoffatomen ist, $R^{32}$ eine lineare Alkylgruppe mit 2 bis 8 Kohlenstoffatomen ist, und das Symbol * in derselben Weise wie oben definiert ist;
den Verbindungen, welche dargestellt werden durch die allgemeine Formel (C-b-X'):

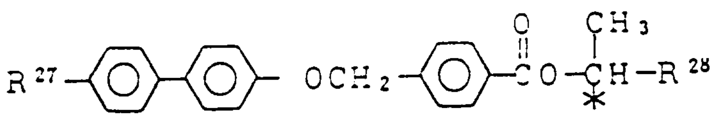

(C-b-X'),

worin $R^{27}$ eine lineare Alkylgruppe mit 5 bis 12 Kohlenstoffatomen oder eine lineare Alkoxygruppe mit 5 bis 12 Kohlenstoffatomen ist, $R^{28}$ eine lineare Alkylgruppe mit 2 bis 10 Kohlenstoffatomen ist, und das Symbol * in derselben Weise wie oben definiert ist;
den Verbindungen, welche dargestellt werden durch die allgemeine Formel (C-b-XI'):

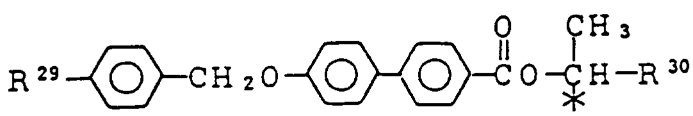

(C-b-XI'),

worin $R^{29}$ eine lineare Alkylgruppe mit 5 bis 12 Kohlenstoffatomen oder eine lineare Alkoxygruppe mit 5 bis 12 Kohlenstoffatomen ist, $R^{30}$ eine lineare Alkylgruppe mit 2 bis 10 Kohlenstoffatomen ist, und das Symbol * in derselben Weise wie oben definiert ist.

**10.** Eine ferroelektrische Flüssigkristallzusammensetzung wie in Anspruch 1 beansprucht, worin der Bestandteil (C) mindestens eine Verbindung ist, welche ausgewählt ist aus der Gruppe bestehend aus:
den Verbindungen, welche dargestellt werden durch die allgemeine Formel (C-a-VIII''):

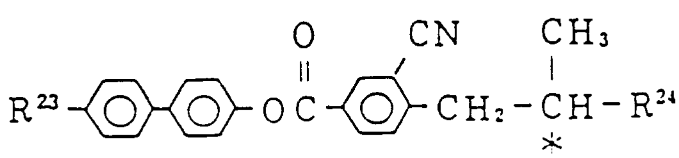

(C-a-VIII''),

worin $R^{23}$ eine lineare Alkylgruppe mit 8 bis 10 Kohlenstoffatomen oder eine lineare Alkoxygruppe mit 8 bis 10 Kohlenstoffatomen ist, $R^{24}$ eine lineare Alkylgruppe mit 2 bis 6 Kohlenstoffatomen ist, und das Symbol * ein asymmetrisches Kohlenstoffatom bezeichnet;
den Verbindungen, welche dargestellt werden durch die allgemeine Formel (C-a-IX''):

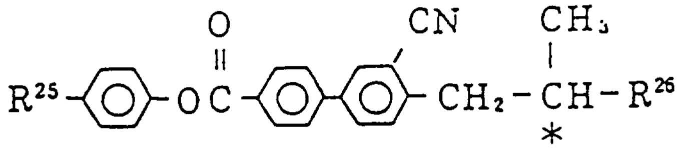

(C-a-XI''),

worin $R^{25}$ eine lineare Alkylgruppe mit 8 bis 10 Kohlenstoffatomen oder eine lineare Alkoxygruppe mit 8 bis 10 Kohlenstoffatomen ist, $R^{26}$ eine lineare Alkylgruppe mit 2 bis 6 Kohlenstoffatomen ist, und das Symbol * in derselben Weise wie oben definiert ist;
den Verbindungen, welche dargestellt werden durch die allgemeine Formel (C-a-XII''):

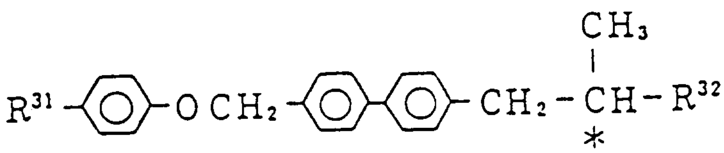

(C-a-XII''),

worin $R^{31}$ eine lineare Alkylgruppe mit 8 bis 10 Kohlenstoffatomen oder eine lineare Alkoxygruppe mit 8 bis 10 Kohlenstoffatomen ist, $R^{32}$ eine lineare Alkylgruppe mit 2 bis 6 Kohlenstoffatomen ist, und das Symbol * in derselben Weise wie oben definiert ist;
den Verbindungen, welche dargestellt werden durch die allgemeine Formel (C-b-X''):

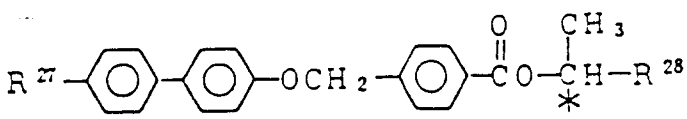

(C-b-X'),

worin $R^{27}$ eine lineare Alkylgruppe mit 5 bis 12 Kohlenstoffatomen oder eine lineare Alkoxygruppe mit 5 bis 12 Kohlenstoffatomen ist, $R^{28}$ eine lineare Alkylgruppe mit 2 bis 6 Kohlenstoffatomen ist, und das Symbol * in derselben Weise wie oben definiert ist; und
den Verbindungen, welche dargestellt werden durch die allgemeine Formel (C-b-XI''):

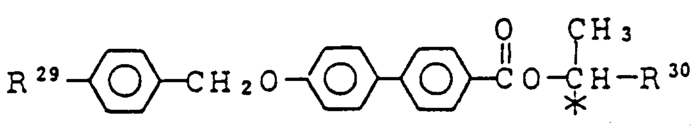

(C-b-XI'),

worin $R^{29}$ eine lineare Alkylgruppe mit 5 bis 12 Kohlenstoffatomen oder eine lineare Alkoxygruppe mit 5 bis 12 Kohlenstoffatomen ist, $R^{30}$ eine lineare Alkylgruppe mit 2 bis 6 Kohlenstoffatomen ist, und das Symbol * in derselben Weise wie oben definiert ist.

**11.** Eine Lichtschaltvorrichtung, welche die ferroelektrische Flüssigkristallzusammensetzung verwendet, wie sie in Anspruch 1 beansprucht ist.

## Revendications

**1.** Composition cristalline liquide ferroélectrique comprenant trois composants (A), (B) et (C) en tant que constituants principaux, les proportions desdits composants (A), (B) et (C) étant 5 à 25 % en poids, 60

à 90 % en poids et 2 à 15 % en poids, respectivement, sur la base du poids total des composants (A), (B) et (C), dans laquelle :

le composant (A) est au moins un composé choisi à partir des composés représentés par la formule générale (A)

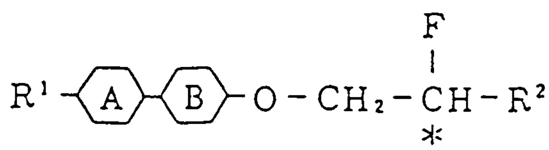 (A)

dans laquelle $R^1$ et $R^2$ peuvent être les mêmes ou différents et sont indépendamment un groupe alkyle linéaire ou ramifié ayant 1 à 18 atomes de carbone ou un groupe alcoxy linéaire ou ramifié ayant 1 à 18 atomes de carbone,

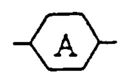 est

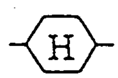 , 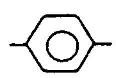 , 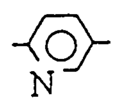 , 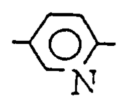 ,

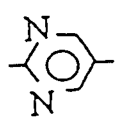 , 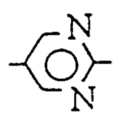 , 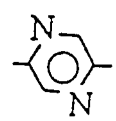 , 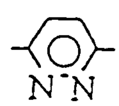 ,

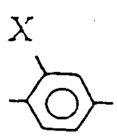 , ou 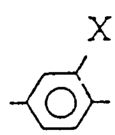 ,

dans lesquelles X est un groupe cyano, ou un atome d'halogène,

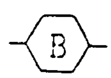 est 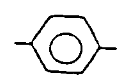 ,

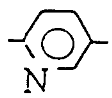 , 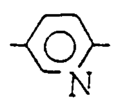 , 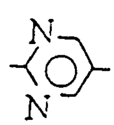 , 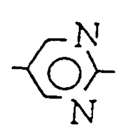 ,

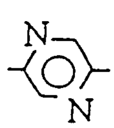 , 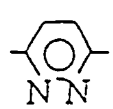 , 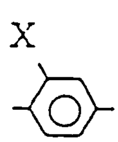 , ou 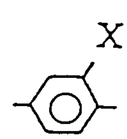 ,

dans lesquelles X est le même que défini précédemment et le symbole * indique un atome de carbone

asymétrique,

le composant (B) est au moins un composé choisi à partir des composés ayant une phase C smectique et représentés par la formule générale (B) :

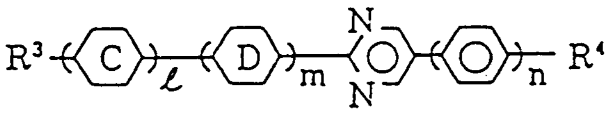 (B)

dans laquelle $R^3$ et $R^4$ peuvent être les mêmes ou différents et sont indépendamment un groupe alkyle linéaire ou ramifié ayant 1 à 18 atomes de carbone, un groupe alcoxy linéaire ou ramifié ayant 1 à 18 atomes de carbone ou un groupe alcanoyloxy linéaire ou ramifié ayant 1 à 18 atomes de carbone,

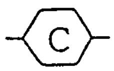 et 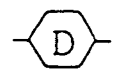

sont indépendamment

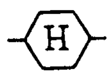 ou 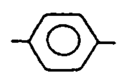 ,

et ℓ, m et n sont 0 ou 1, et

le composant (C) est au moins un composé choisi à partir du groupe constitué de :
les composés représentés par la formule générale (C-a) :

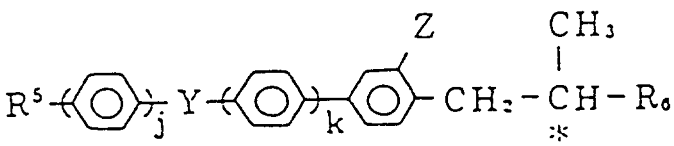 (C-a)

dans laquelle $R^5$ est un groupe linéaire ou ramifié ayant 1 à 18 atomes de carbone ou un groupe alcoxy linéaire ou ramifié ayant 1 à 18 atomes de carbone, $R^6$ est un groupe alkyle linéaire ou ramifié ayant 2 à 18 atomes de carbone ou un groupe alcoxy linéaire ou ramifié ayant 1 à 18 atomes de carbone, Y est

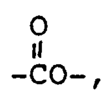, 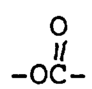,

$-CH_2O-$ ou $-OCH_2-$, Z est un groupe cyano, un atome d'halogène ou un atome d'hydrogène, j est 0,1 ou 2 et k est 0 ou 1 et le symbole * est le même que défini précédemment et les composés représentés par la formule générale (C-b) :

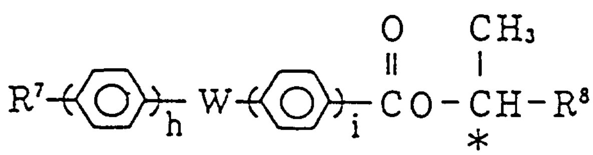 (C-b)

dans laquelle $R^7$ est un groupe alkyle linéaire ou ramifié ayant 1 à 18 atomes de carbone ou un groupe alcoxy linéaire ou ramifié ayant 1 à 18 atomes de carbone, $R^8$ est un groupe alkyle linéaire ou ramifié ayant 2 à 18 atomes de carbone ou un groupe alcoxy linéaire ou ramifié ayant 1 à 18 atomes de

carbone, W est

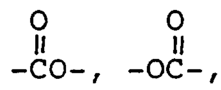

$-CH_2O-$ ou $-OCH_2-$, h et i sont 0,1 ou 2 et le symbole * est le même que défini précédemment.

**2.** Composition cristalline liquide ferroélectrique selon la revendication 1, dans laquelle le composant (A) est au moins un composé choisi à partir du groupe constitué de :

les composés représentés par la formule générale (A-I) :

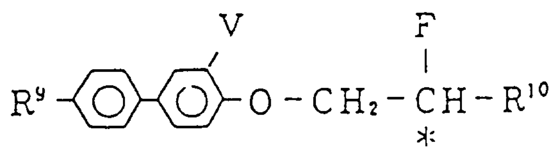

(A-I)

dans laquelle $R^9$ et $R^{10}$ peuvent être les mêmes ou différents et sont de manière indépendante un groupe alkyle linéaire ou ramifié ayant 1 à 18 atomes de carbone ou un groupe alcoxy linéaire ou ramifié ayant 1 à 18 atomes de carbone, V est -H, -CN, -F ou -Cl et le symbole * indique un atome de carbone asymétrique,

les composés représentés par la formule générale (A-II) :

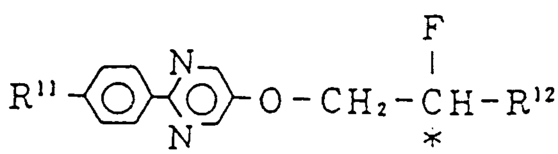

(A-II)

dans laquelle $R^{11}$ et $R^{12}$ peuvent être les mêmes ou différents et sont de manière indépendante un groupe alkyle linéaire ou ramifié ayant 1 à 18 atomes de carbone ou un groupe alcoxy linéaire ou ramifié ayant 1 à 18 atomes de carbone et le symbole * est le même que défini précédemment,

les composés représentés par la formule générale (A-III) :

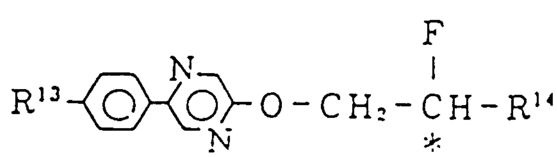

(A-III)

dans laquelle $R^{13}$ et $R^{14}$ peuvent être les mêmes ou différents et sont de manière indépendante un groupe alkyle linéaire ou ramifié ayant 1 à 18 atomes de carbone ou un groupe alcoxy linéaire ou ramifié ayant 1 à 18 atomes de carbone et le symbole * est le même que défini précédemment,

les composés représentés par la formule générale (A-IV) :

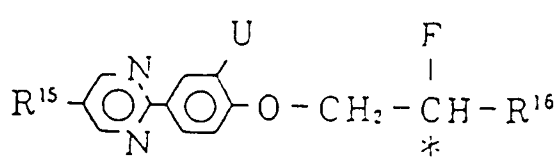

(A-IV)

dans laquelle $R^{15}$ et $R^{16}$ peuvent être les mêmes ou différents et sont de manière indépendante un groupe alkyle linéaire ou ramifié ayant 1 à 18 atomes de carbone ou un groupe alcoxy linéaire ou

ramifié ayant 1 à 18 atomes de carbone, U est -H, -CN, -F ou -Cl et le symbole * est le même que défini précédemment, et

les composés représentés par la formule générale (A-V) :

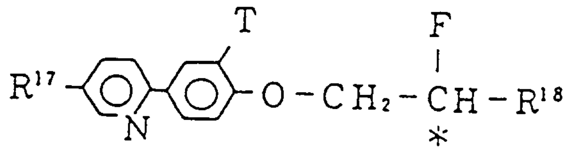

(A-V)

dans laquelle $R^{17}$ et $R^{18}$ peuvent être les mêmes ou différents et sont de manière indépendante un groupe alkyle linéaire ou ramifié ayant 1 à 18 atomes de carbone ou un groupe alcoxy linéaire ou ramifié ayant 1 à 18 atomes de carbone, T est -H, -CN, -F ou -Cl et le symbole * est le même que défini précédemment.

**3.** Composition cristalline liquide ferroélectrique selon la revendication 1, dans laquelle le composant (B) est au moins un composé choisi à partir du groupe constitué de :

les composés ayant une phase C smectique et représentés par la formule générale (B-VI) :

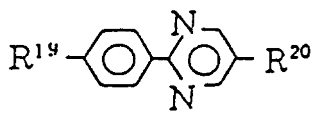

(B-VI)

dans laquelle $R^{19}$ et $R^{20}$ peuvent être les mêmes ou différents et sont de manière indépendante un groupe alkyle linéaire ou ramifié ayant 1 à 18 atomes de carbone, un groupe alcoxy linéaire ou ramifié ayant 1 à 18 atomes de carbone ou un groupe alcanoyloxy linéaire ou ramifié ayant 1 à 18 atomes de carbone, et

les composés ayant une phase c smectique et représentés par la formule générale (B-VII) :

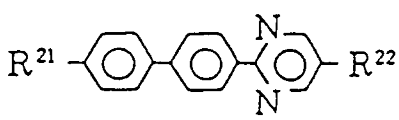

(B-VII)

dans laquelle $R^{21}$ et $R^{22}$ peuvent être les mêmes ou différents et sont de manière indépendante un groupe alkyle linéaire ou ramifié ayant 1 à 18 atomes de carbone ou un groupe alcoxy linéaire ou ramifié ayant 1 à 18 atomes de carbone.

**4.** Composition cristalline liquide ferroélectrique selon la revendication 1, dans laquelle le composant (C) est au moins un composé choisi à partir du groupe constitué de :

les composés représentés par la formule générale (C-a-VIII) :

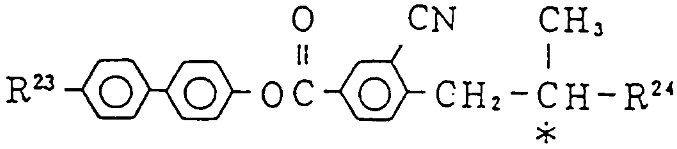

(C-a-VIII)

dans laquelle $R^{23}$ est un groupe alkyle ayant 1 à 18 atomes de carbone ou un groupe alcoxy ayant 1 à 18 atomes de carbone, $R^{24}$ est un groupe alkyle ayant 2 à 18 atomes de carbone et le symbole * indique un atome de carbone asymétrique,

les composés représentés par la formule générale (C-a-IX)

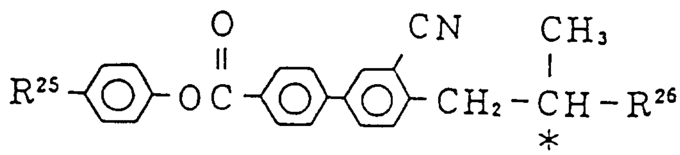

(C-a-IX)

dans laquelle $R^{25}$ est un groupe alkyle ayant 1 à 18 atomes de carbone ou un groupe alcoxy ayant 1 à 18 atomes de carbone, $R^{26}$ est un groupe alkyle ayant 2 à 18 atomes de carbone et le symbole * est le même que défini précédemment,

les composés représentés par la formule générale (C-a-XII).

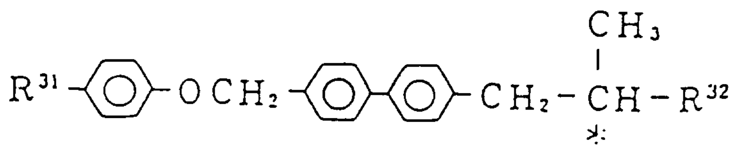

(C-a-XII)

dans laquelle $R^{31}$ est un groupe alkyle ayant 1 à 18 atomes de carbone ou un groupe alcoxy ayant 1 à 18 atomes de carbone, $R^{32}$ est un groupe alkyle ayant 2 à 18 atomes de carbone et le symbole * est le même que défini précédemment,

les composés représentés par la formule générale (C-b-X) :

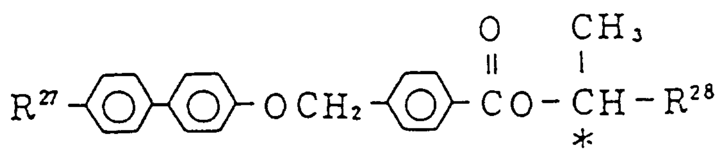

(C-b-X)

dans laquelle $R^{27}$ est un groupe alkyle ayant 1 à 18 atomes de carbone ou un groupe alcoxy ayant 1 à 18 atomes de carbone, $R^{28}$ est un groupe alkyle ayant 2 à 18 atomes de carbone et le symbole * est le même que défini précédemment, et

les composés représentés par la formule générale (C-b-XI) :

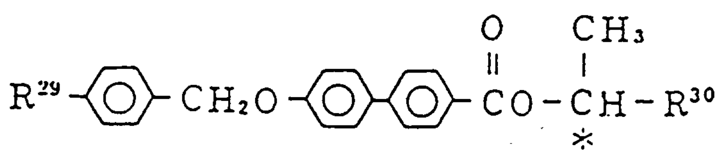

(C-b-XI)

dans laquelle $R^{29}$ est un groupe alkyle ayant 1 à 18 atomes de carbone ou un groupe alcoxy ayant 1 à 18 atomes de carbone, $R^{30}$ est un groupe alkyle ayant 2 à 18 atomes de carbone et le symbole * est le même que défini précédemment.

**5.** Composition cristalline liquide ferroélectrique selon la revendication 1, dans laquelle le composant (A) est au moins un composé choisi à partir du groupe constitué de :

les composés représentés par la formule générale (A-I') :

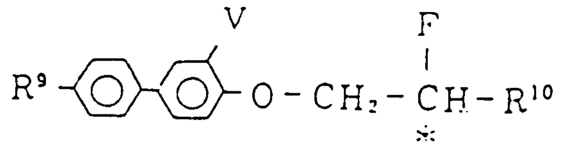

(A-I')

dans laquelle $R^9$ est un groupe alkyle linéaire ayant 5 à 14 atomes de carbone ou un groupe alcoxy linéaire ayant 5 à 14 atomes de carbone, $R^{10}$ est un groupe alkyle linéaire ayant 4 à 11 atomes de carbone ou un groupe alcoxy linéaire ayant 4 à 11 atomes de carbone, V est -H ou -F et le symbole * indique un atome de carbone asymétrique,

les composés représentés par la formule générale (A-II')

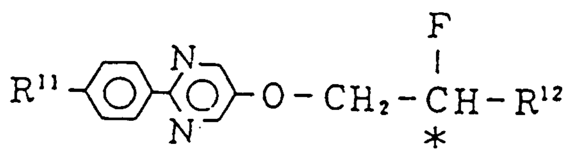

(A-II')

dans laquelle $R^{11}$ est un groupe alkyle linéaire ayant 5 à 14 atomes de carbone ou un groupe alcoxy linéaire ayant 5 à 14 atomes de carbone, $R^{12}$ est un groupe alkyle linéaire ayant 4 à 11 atomes de carbone ou un groupe alcoxy linéaire ayant 4 à 11 atomes de carbone et le symbole * est le même comme défini,

les composés représentés par la formule générale (A-III')

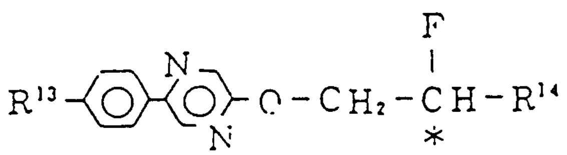

(A-III')

dans laquelle $R^{13}$ est un groupe alkyle linéaire ayant 5 à 14 atomes de carbone ou un groupe alcoxy linéaire ayant 5 à 14 atomes de carbone, $R^{14}$ est un groupe alkyle linéaire ayant 4 à 11 atomes de carbone ou un groupe alcoxy linéaire ayant 4 à 11 atomes de carbone et le symbole * est le même que défini précédemment,

les composés représentés par la formule générale (A-IV')

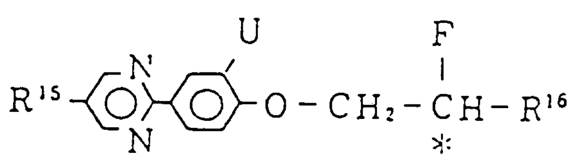

(A-IV')

dans laquelle $R^{15}$ est un groupe alkyle linéaire ayant 5 à 14 atomes de carbone ou un groupe alcoxy linéaire ayant 5 à 14 atomes de carbone, $R^{16}$ est un groupe alkyle linéaire ayant 4 à 11 atomes de carbone ou un groupe alcoxy linéaire ayant 4 à 11 atomes de carbone, U est -H ou -F et le symbole * est le même que défini précédemment, et

les composés représentés par la formule générale (A-V')

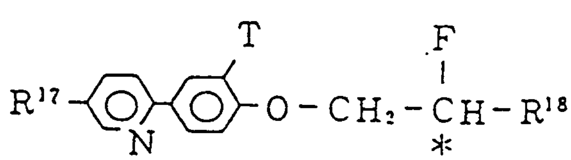

(A-V')

dans laquelle $R^{17}$ est un groupe alkyle linéaire ayant 5 à 14 atomes de carbone ou un groupe alcoxy linéaire ayant 5 à 14 atomes de carbone, $R^{18}$ est un groupe alkyle linéaire ayant 4 à 11 atomes de carbone ou un groupe alcoxy linéaire ayant 4 à 11 atomes de carbone, T est -H ou -F et le symbole * est le même que défini précédemment.

**6.** Composition cristalline liquide ferroélectrique selon la revendication 1, dans laquelle le composant (A) est au moins un composé choisi à partir du groupe constitué de :

les composés représentés par la formule générale (A-I") :

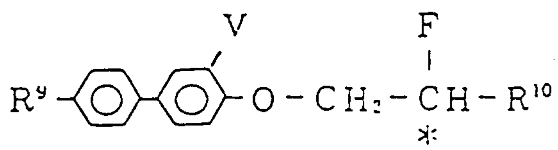

(A-I")

dans laquelle $R^9$ est un groupe alkyle linéaire ayant 5 à 14 atomes de carbone ou un groupe alcoxy linéaire ayant 5 à 14 atomes de carbone, $R^{10}$ est un groupe alkyle linéaire ayant 4 à 11 atomes de carbone, V est -H ou -F et le symbole * indique un atome de carbone asymétrique,

les composés représentés par la formule générale (A-II")

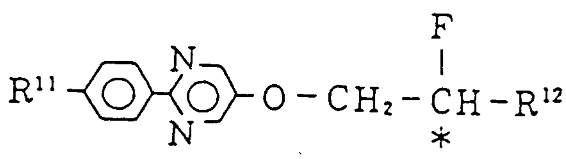

(A-II")

dans laquelle $R^{11}$ est un groupe alkyle linéaire ayant 5 à 14 atomes de carbone ou un groupe alcoxy linéaire ayant 5 à 14 atomes de carbone, $R^{12}$ est un groupe alkyle linéaire ayant 4 à 11 atomes de carbone et le symbole * est le même que défini précédemment,

les composés représentés par la formule générale (A-III")

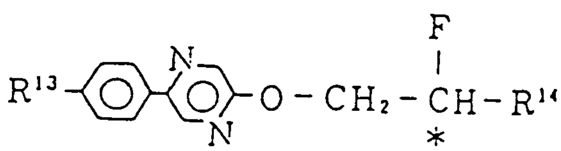

(A-III")

dans laquelle $R^{13}$ est un groupe alkyle linéaire ayant 5 à 14 atomes de carbone ou un groupe alcoxy linéaire ayant 5 à 14 atomes de carbone, $R^{14}$ est un groupe alkyle linéaire ayant 4 à 11 atomes de carbone et le symbole * est le même que défini précédemment,

les composés représentés par la formule générale (A-IV")

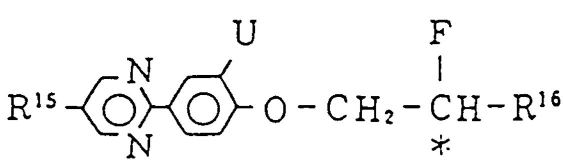

(A-IV")

dans laquelle $R^{15}$ est un groupe alkyle linéaire ayant 5 à 14 atomes de carbone ou un groupe alcoxy linéaire ayant 5 à 14 atomes de carbone, $R^{16}$ est un groupe alkyle linéaire ayant 4 à 11 atomes de carbone, U est -H ou -F et le symbole * est le même que défini précédemment, et

les composés représentés par la formule générale (A-V")

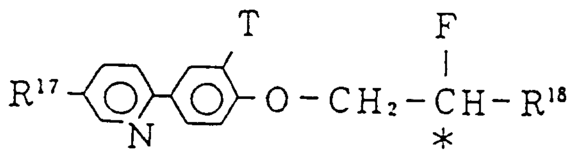 (A-V")

dans laquelle $R^{17}$ est un groupe alkyle linéaire ayant 5 à 14 atomes de carbone ou un groupe alcoxy linéaire ayant 5 à 14 atomes de carbone, $R^{18}$ est un groupe alkyle linéaire ayant 4 à 11 atomes de carbone, T est -H ou -F et le symbole * est le même que défini précédemment.

**7.** Composition cristalline liquide ferroélectrique selon la revendication 1, dans laquelle le composant (B) est au moins un composé choisi à partir du groupe constitué de :

les composés ayant une phase C smectique et représentés par la formule générale (B-VI') :

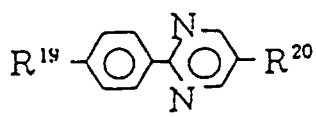 (B-VI')

dans laquelle $R^{19}$ est un groupe alkyle linéaire ayant 5 à 12 atomes de carbone, un groupe alcoxy linéaire ayant 5 à 12 atomes de carbone ou un groupe alcanoyle linéaire ayant 5 à 12 atomes de carbone, $R^{20}$ est un groupe alkyle linéaire ayant 7 à 15 atomes de carbone ou un groupe alcoxy linéaire ayant 7 à 15 atomes de carbone, et

les composés ayant une phase C smectique et représentés par la formule générale (B-VII') :

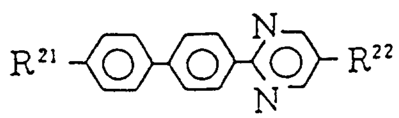 (B-VII')

dans laquelle $R^{21}$ et $R^{22}$ sont de manière indépendante un groupe alkyle linéaire ayant 5 à 10 atomes de carbone ou un groupe alcoxy linéaire ayant 5 à 10 atomes de carbone.

**8.** Composition cristalline liquide ferroélectrique selon la revendication 1, dans laquelle le composant (B) est au moins un composé choisi à partir du groupe constitué de :

les composés ayant une phase C smectique et représentés par la formule générale (B-VI") :

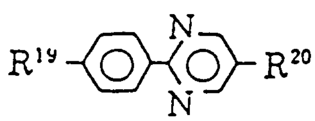 (B-VI")

dans laquelle $R^{19}$ est un groupe alkyle linéaire ayant 6 à 12 atomes de carbone ou un groupe alcoxy linéaire ayant 6 à 12 atomes de carbone, $R^{20}$ est un groupe alkyle linéaire ayant 7 à 15 atomes de carbone ou un groupe alcoxy linéaire ayant 7 à 15 atomes de carbone, et

les composés ayant une phase C smectique et représentés par la formule générale (B-VII") :

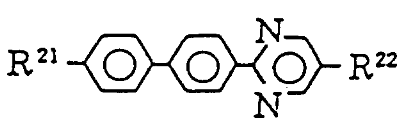 (B-VII")

dans laquelle $R^{21}$ est un groupe alkyle linéaire ayant 5 à 8 atomes de carbone ou un groupe alcoxy

linéaire ayant 5 à 8 atomes de carbone et $R^{22}$ est un groupe alkyle linéaire ayant 6 à 8 atomes de carbone.

**9.** Composition cristalline liquide ferroélectrique selon la revendication 1, dans laquelle le composant (C) est au moins un composé choisi à partir du groupe constitué de :

les composés représentés par la formule générale (C-a-VIII') :

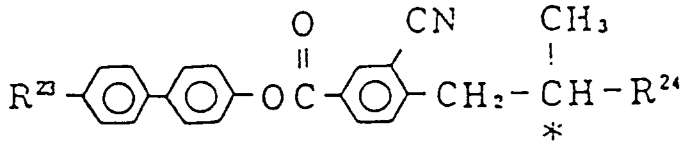

(C-a-VIII')

dans laquelle $R^{23}$ est un groupe alkyle linéaire ayant 5 à 12 atomes de carbone ou un groupe alcoxy linéaire ayant 5 à 12 atomes de carbone, $R^{24}$ est un groupe alkyle linéaire ayant 2 à 8 atomes de carbone et le symbole * indique un atome de carbone asymétrique,

les composés représentés par la formule générale (C-a-IX') :

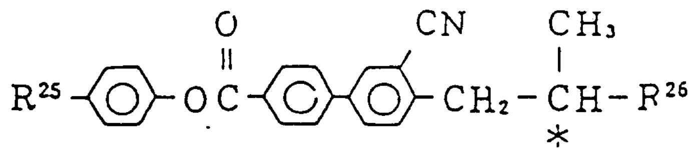

(C-a-IX')

dans laquelle $R^{25}$ est un groupe alkyle linéaire ayant 5 à 12 atomes de carbone ou un groupe alcoxy linéaire ayant 5 à 12 atomes de carbone, $R^{26}$ est un groupe alkyle linéaire ayant 2 à 8 atomes de carbone et le symbole * est le même que défini précédemment,

les composés représentés par la formule générale (C-a-XII').

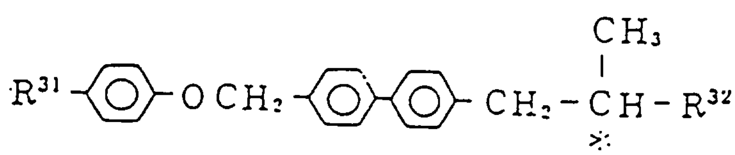

(C-a-XII')

dans laquelle $R^{31}$ est un groupe alkyle linéaire ayant 5 à 12 atomes de carbone ou un groupe alcoxy linéaire ayant 5 à 12 atomes de carbone, $R^{32}$ est un groupe alkyle linéaire ayant 2 à 8 atomes de carbone et le symbole * est le même que défini précédemment,

les composés représentés par la formule générale (C-b-X') :

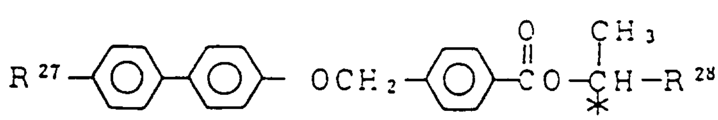

(C-b-X')

dans laquelle $R^{27}$ est un groupe alkyle linéaire ayant 5 à 12 atomes de carbone ou un groupe alcoxy linéaire ayant 5 à 12 atomes de carbone, $R^{28}$ est un groupe alkyle linéaire ayant 2 à 10 atomes de carbone et le symbole * est le même que défini précédemment, et

les composés représentés par la formule générale (C-b-XI') :

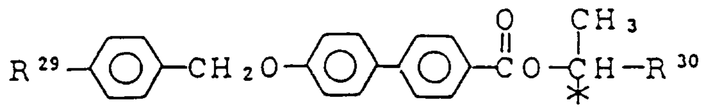

(C-b-XI')

dans laquelle $R^{29}$ est un groupe alkyle linéaire ayant 5 à 12 atomes de carbone ou un groupe alcoxy linéaire ayant 5 à 12 atomes de carbone, $R^{30}$ est un groupe alkyle linéaire ayant 2 à 10 atomes de carbone et le symbole * est le même que défini précédemment.

**10.** Composition cristalline liquide ferroéléctrique selon la revendication 1, dans laquelle le composant (C) est au moins un composé choisi à partir du groupe constitué de :

les composés représentés par la formule générale (C-a-VIII")

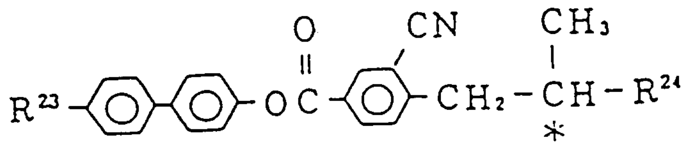

(C-a-VIII")

dans laquelle $R^{23}$ est un groupe alkyle linéaire ayant 8 à 10 atomes de carbone ou un groupe alcoxy linéaire ayant 8 à 10 atomes de carbone, $R^{24}$ est un groupe alkyle linéaire ayant 2 à 6 atomes de carbone et le symbole * indique un atome de carbone asymétrique,

les composés représentés par la formule générale (C-a-IX") :

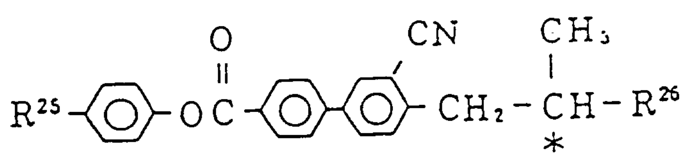

(C-a-IX")

dans laquelle $R^{25}$ est un groupe alkyle linéaire ayant 8 à 10 atomes de carbone ou un groupe alcoxy linéaire ayant 8 à 10 atomes de carbone, $R^{26}$ est un groupe alkyle linéaire ayant 2 à 6 atomes de carbone et le symbole * est le même que défini précédemment,

les composés représentés par la formule générale (C-a-XII") :

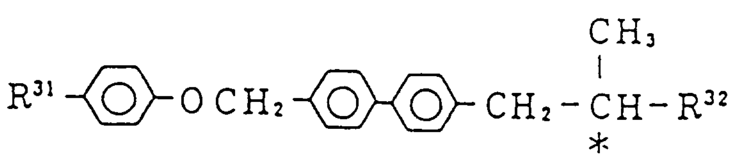

(C-a-XII")

dans laquelle $R^{31}$ est un groupe alkyle linéaire ayant 8 à 10 atomes de carbone ou un groupe alcoxy linéaire ayant 8 à 10 atomes de carbone, $R^{32}$ est un groupe alkyle linéaire ayant 2 à 6 atomes de carbone et le symbole * est le même que défini précédemment,

les composés représentés par la formule générale (C-b-X") :

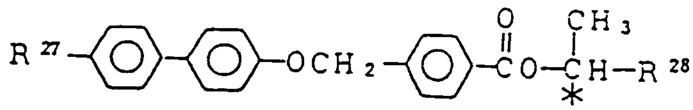

(C-b-X')

dans laquelle $R^{27}$ est un groupe alkyle linéaire ayant 5 à 12 atomes de carbone ou un groupe alcoxy linéaire ayant 5 à 12 atomes de carbone, $R^{28}$ est un groupe alkyle linéaire ayant 2 à 6 atomes de carbone et le symbole * est le même que défini précédemment, et

les composés représentés par la formule générale (C-b-XI'') :

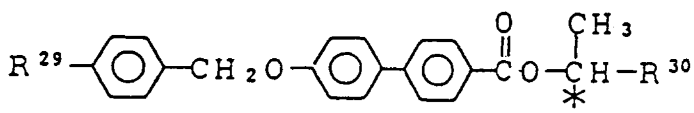

(C-b-XI')

dans laquelle $R^{29}$ est un groupe alkyle linéaire ayant 5 à 12 atomes de carbone ou un groupe alcoxy linéaire ayant 5 à 12 atomes de carbone, $R^{30}$ est un groupe alkyle linéaire ayant 2 à 6 atomes de carbone et le symbole * est le même que défini précédemment.

**11.** Commutateur optique utilisant la composition cristalline liquide ferroélectrique selon la revendication 1.